# EUROPÄISCHE PATENTSCHRIFT

(11) **EP 2 070 741 B1**
(45) Veröffentlichungstag und Bekanntmachung des Hinweises auf die Patenterteilung: **30.06.2010**
(21) Anmeldenummer: 08019446.7
(22) Anmeldetag: 06.11.2008
(51) Int. Cl.: B60G 17/052, B60T 17/02

(54) **Luftfederungsanlage eines Fahrzeuges**
Air suspension system for a vehicle
Système de suspension pneumatique d'un véhicule

(30) Priorität: 30.11.2007 DE 102007057836
(43) Veröffentlichungstag der Anmeldung: 17.06.2009
(73) Patentinhaber: Haldex Brake Products GmbH, 69123 Heidelberg (DE)
(72) Erfinder: Berdesinski, Michael, 69168 Wiesloch (DE)
(74) Vertreter: Rehberg Hüppe + Partner

(56) Entgegenhaltungen:
- WO-A-2005/049345
- DE-A1- 4 012 078
- DE-A1- 4 202 729
- DE-A1- 19 958 221
- DE-A1-102006 017 890
- DE-B3-102005 017 590
- DE-B3-102005 019 479
- DE-C1- 4 319 943
- DE-C1- 19 544 622
- US-B2- 6 935 625

## Beschreibung

### TECHNISCHES GEBIET DER ERFINDUNG

Die vorliegende Erfindung betrifft eine Luftfederungsanlage eines Fahrzeuges oder eines Anhängers mit einer Druckluftversorgungseinrichtung, einem Federbalg und einem zwischen Druckluftversorgungseinrichtung und Federbalg zwischengeschalteten Hebe-Senkventil sowie einer Niveauregeleinrichtung. Hierbei können das Ventil und die Niveauregeleinrichtung als separate Baueinheiten realisiert sein oder in eine pneumatische Baueinheit integriert sein.

### STAND DER TECHNIK

Bekannte Luftfederungsanlagen besitzen eine Niveauregeleinrichtung, die einer Einstellung des Druckluftniveaus in einem Federbalg je nach Beladungszustand des Fahrzeuges bzw. Anhängers dient. Weiterhin kann die Niveauregeleinrichtung eingesetzt werden, um das Fahrzeug oder den Anhänger für einen Be- oder Entladungsvorgang auf eine gewünschte Niveauhöhe zu bringen. Ein weiterer Einsatzzweck einer Niveauregeleinrichtung ist es, das Fahrzeug oder den Anhänger während des Fahrbetriebes auf einem konstanten Niveau zu halten, was u. U. auch für vorhandene Druckluftverluste gegeben sein soll, so dass über die Niveauregeleinrichtung ein Ausgleich von Druckluftverlusten erfolgen kann. Hierbei kann für sämtliche genannten Ausführungsformen des Niveauregelventils eine mechanische, pneumatische oder elektrische Niveauregelung Einsatz finden.

In DE 199 58 221 A1 ist ein Zusammenhang zwischen einer Druckänderung in dem Federbalg auf einer kurveninneren Seite während des Durchfahrens einer Kurve und einer Zentripetalbeschleunigung erkannt worden. Um ein Umkippen des Fahrzeuges vermeiden zu können, wird der Druck in dem kurveninneren Federbalg erfasst und für den Fall, dass der Druck einen unteren Schwellwert unterschreitet oder eine aktuelle Querbeschleunigung des Fahrzeuges einen Schwellwert überschreitet, die Geschwindigkeit des Fahrzeuges durch eine Fahrerwarnung, eine automatische Motordrosselung oder eine automatische Einbremsung verhindert.

DE 195 44 622 C1 offenbart eine Steueranlage für ein luftgefedertes Fahrzeug mit einem zwischen Luftfederbälge und Druckluftquellen zwischengeordnetem Niveauregelventil mit einem optionalen ergänzenden Hebe-Senkventil zur Reduzierung des Luftverbrauchs der Luftfederung in Folge einer Aktivität des Niveauregelventils bei dynamischen Änderungen der Fahrhöhe während der Fahrt, schlägt die Druckschrift vor, ein zusätzliches Magnetventil den Luftfederbälgen vorzuschalten, welches in eine gedrosselte oder abgesperrte Stellung bringbar ist. Hierbei kann das Magnetventil dem Niveauregelventil vor- oder nachgeschaltet sein. Für die Ansteuerung des Magnetventils kann ein ohnehin für eine ABS-Anlage zur Verfügung stehendes Signal verwendet werden, welches den Fahrzustand des Fahrzeugs symbolisiert. Über das Magnetventil kann eine von dem Niveauregelventil verursachte Druckluftbewegung, insbesondere eine Belüftung der Luftfederbälge, gedrosselt oder verhindert werden. Bei dem Magnetventil handelt es sich beispielsweise um ein 2/2-Wegemagnetventil oder ein 4/2-Wege-Magnetventil. Weiterhin schlägt die Druckschrift vor, zur Erfassung schleichender Undichtigkeiten der Luftfederanlage einen Näherungsschalter einzusetzen, der die Fahrgestellhöhe erfasst. Dieser Näherungsschalter kann ein von der ABS-Anlage ausgehendes Signal zur Überführung des Magnetventils in die gedrosselte oder gesperrte Stellung wirkungslos machen, so dass trotz anderweitigem Fahrzustands des Fahrzeugs die schleichende Undichtigkeit der Luftfederungsanlage ausgeglichen werden kann.

DE 10 2006 017 890 A1 beschreibt ein Hebe-Senkventil, welches elektrisch ansteuerbar ist und in unterschiedlichen Stellungen verriegelbar oder rastierbar ist mit automatischer Überführung von einer Stellung in eine andere Stellung.

### AUFGABE DER ERFINDUNG

Aufgabe der vorliegenden Erfindung ist es, eine Luftfederungsanlage derart zu verbessern, dass sich bei dem Fahrzeug auftretende Beschleunigungen nicht negativ auf den Betriebszustand der Luftfederungsanlage auswirken.

### LÖSUNG

Die Aufgabe der Erfindung wird erfindungsgemäß mit einer Luftfederungsanlage gemäß dem unabhängigen Patentanspruch 1 gelöst. Weitere Ausgestaltungen dieser Lösung ergeben sich entsprechend den abhängigen Patentansprüchen 2 bis 16.

### BESCHREIBUNG DER ERFINDUNG

Der vorliegenden Erfindung liegt die Erkenntnis zugrunde, dass es für eine Beschleunigung des Fahrzeuges zu einer Veränderung des Niveaus mindestens eines Federbalges kommt. Beispielsweise führt ein Bremsen des Fahrzeuges zu einem Einfedern einer vorderen Achse, wobei je nach Beladung des Fahrzeuges auch eine hintere Achse ein- oder ausfedern kann. Entsprechend kann eine Querbeschleunigung des Fahrzeuges zu der Änderung eines Niveaus eines Federbalges einer Fahrzeugseite führen.

Weiterhin beruht die Erfindung auf der Erkenntnis, dass für eine derartige Veränderung des Niveaus eines Federbalges die Niveauregeleinrichtung be- oder entlüftend tätig wird, um der Niveauänderung entgegenzuwirken. Eine hierdurch bedingte Veränderung des Druckluftvolumens in dem Federbalg hat zur Folge, dass nach Beendigung des Beschleunigungszustandes eine Rückstellung nicht auf das ursprüngliche Niveau erfolgt, sondern vielmehr für ein zusätzliches Befüllen durch die Niveauregeleinrichtung nach Entfall der Beschleunigung ein zu hohes Niveau vorliegt. Dies hat wiederum zur Folge, dass die Niveauregeleinrichtung den Federbalg entlüften muss. Gleiches gilt umgekehrt für eine Entlüftung des Luftfederbalges während einer Niveaureduzierung infolge einer auftretenden Beschleunigung. Zusammenfassend ist damit festzustellen, dass in Folge des eingetretenen Beschleunigungszustandes ein Belüftungszustand und/oder ein Entlüftungszustand durch die Niveauregeleinrichtung (oder umgekehrt) eingeleitet wird, der nicht zwingend erforderlich ist, den Druckluftverbrauch erhöht und den Fahrzustand des Fahrzeuges unter Umständen destabilisieren kann.

Die vorgenannten Probleme können sich potenzieren für den Fall, dass sich das Fahrzeug beispielsweise an eine Ampel annähert, so dass dem Stillstand des Fahrzeuges ein längerer Bremsvorgang vorangeht. Insbesondere für den Fall, dass das Fahrzeug an einer Steigung zum Stehen kommt oder mit einer Flüssigkeit befüllt ist, bleibt der Fahrer auch für den Stillstand des Fahrzeuges auf der Bremse stehen. Für blockierte Fahrzeugräder kann in Folge der Kinematik der Aufhängung der Achsen ein Ausfedern der Federbälge blockiert sein. Dies hat zur Folge, dass sowohl während des länger andauernden Bremsvorganges als auch während des Stillstandes an der Ampel die Niveauregeleinrichtung davon ausgeht, dass eine Befüllung des Luftfederbalges erforderlich ist, so dass der Federbalg mit der Zeit mit einem großen Zusatz-Druckluftvolumen befüllt wird. Löst dann der Fahrer die Bremse, federt der Federbalg um ein großes Maß aus, was negativ für den Fahrzustand sein kann. Erkennt die Niveauregeleinrichtung das hieraus resultierende zu hohe Niveau des Federbalges, sind weitere Regeleingriffe erforderlich.

Auf Grundlage der erläuterten Beobachtungen schlägt die Erfindung vor, einen *Beschteunigungszustand* zu erfassen. Bei einem derartigen "*Beschleunigungszustand*' kann es sich um einen beliebigen Beschleunigungsindikator handeln. Beispielsweise ist der Beschleunigungszustand ein Beschleunigungswert, ein mit einer Beschleunigung korrelierender Wert oder ein digitaler oder binärer Wert, dass eine Beschleunigung vorliegt oder nicht vorliegt. Ebenfalls kann ein digitaler Wert eingesetzt werden, ob die Beschleunigung ober- oder unterhalb eines Schwellwertes liegt. Neben einer tatsächlich vorliegenden Beschleunigung kann eine geschätzte oder vorhersehbare Beschleunigung des Fahrzeuges eingesetzt werden. Weiterhin kann die Beschleunigung hinsichtlich der Orientierung beliebig sein. Insbesondere betrifft die Beschleunigung die Ursache eines Nickens, eines Neigens, einen Gierens, einer Kurvenfahrt oder eines Bremseingriffes. Ebenfalls möglich ist eine Verwertung eines mit der Beschleunigung korrelierenden Signals oder Druckes für den Beschleunigungszustand, bspw. eines Bremsdruckes, eines vom Bremsdruck abgeleiteten Druckes oder eines elektrischen Bremssignales. Für einen Querbeschteunigungszustand kann eine Berücksichtigung einer Fahrgeschwindigkeit, einer Beladung oder eines Fahrzeuggewichts und/oder eines Kurvenradius erfolgen.

Durch das erfindungsgemäße Erfassen eines Beschleunigungszustandes wird a priori erkannt, dass eine folgende Niveauänderung durch die Beschleunigung verursacht ist, so dass das oben geschilderte Niveauregelverhalten entsprechend beeinflusst oder unterbunden werden kann.

Hierzu schlägt die Erfindung vor, dass die Steuerung der Be- und/oder Entlüftung des Federbalges durch ein Hebe-Senkventil unter Berücksichtigung des Beschleunigungszustandes erfolgt. Eine derartige Berücksichtigung kann beliebig sein. Beispielsweise kann je nach Beschleunigungszustand oder Über- oder Unterschreiten eines Schwellwertes die Be- oder Entlüftung vollständig ausbleiben. Ebenfalls denkbar ist, dass eine Be- oder Entlüftung in einem verringerten oder verstärkten Ausmaß erfolgt. Die Eingriffsmöglichkeiten auf das Hebe-Senkventil sind hierbei beliebig. Insbesondere wird das Hebe-Senkventil über eine Steuereinrichtung elektrisch angesteuert, wobei die Steuereinrichtung den Beschleunigungszustand verarbeitet. Ebenfalls möglich ist eine pneumatische Ansteuerung des Hebe-Senkventils oder einer elektro-pneumatische Ansteuerung, wozu bspw. ein elektrisch von einer Steuereinrichtung Beschleunigungsabhängig vorgesteuerter Druck oder ein mit einem Bremsdruck korrelierender Druck oder diesem Druck entsprechender Druck genutzt werden kann. Neben der Vermeidung unnötiger Regeleingriffe und unnötiger Beeinflussungen der Niveauhöhe führt die Erfindung zu einer Reduzierung des Druckluftverbrauches.

Von besonderer Bedeutung sind die erfindungsgemäßen Maßnahmen insbesondere im Zusammenhang mit Bremsvorgängen für den Fall, das mittels einer Bremsung stärkere verzögernde Beschleunigungen erzielt werden können als für eine Vergrößerung der Geschwindigkeit des Fahrzeuges durch das Antriebsaggregat.

Beispielhafte oder abgewandelte Möglichkeiten eines derartigen Verfahrens sind aus der Druckschrift US 6,935,625 B2 eines konzernverbundenen Unternehmens der Anmelderin bekannt. Bei dem dort offenbarten System ist ein beispielsweise als Sperrventil ausgebildetes Ventil zwischen ein Niveauregelventil und eine Luftfeder zwischengeschaltet. Dieses Ventil kann nach Maßgabe eines Bremssystems, einer Zeitmessung, einer Eingabe des Benutzers, einem Bewegungssensor, einer Höhenmessung oder eines Antischlupfsystems beaufschlagt werden. Zur Vermeidung eines zu hohen Luftverbrauchs infolge Regelvorgängen des Niveauregelventils bei einer durch einen Bremsvorgang induzierten Schwingung oder Nick-Bewegung des Fahrzeuges oder Anhängers kann das Ventil nach Maßgabe einer erfassten Bremsung, beispielsweise auf Grundlage einer ABS-Bremsung, einer Schlupfregelung, eines elektronischen Bremssystems, des Bewegungssensors, einer Zeitmessung oder einer Eingabe des Bedieners in seine Sperrstellung verbracht werden. In der Sperrstellung vermeidet das Ventil sowohl eine Belüftung als auch eine Entlüftung der Luftfeder.

Für die Lösung der der Erfindung zugrunde liegenden Aufgabe ist das Ventil, über welches in Abhängigkeit von dem Beschleunigungszustand oder Bremsvorgang eine Beeinflussung der Be- und/oder Entlüftung des Federbalges erfolgt, nicht ausschließlich für diesen Zweck eingesetzt. Vielmehr ist dieses ein multifunktionales Hebe-Senkventil, welches neben der zuvor genannten Funktion auch zum manuellen Betätigen zum Heben und/oder Senken eines Fahrzeugaufbaus dient. Dieser Ausgestaltung nutzt die Erkenntnis, dass ein Hebe-Senkventil ohnehin eine Öffnungsstellung sowie eine Schließstellung besitzt, wobei in einem Hebe-Senkventil die Öffnungsstellung zum Heben des Fahrzeugaufbaus genutzt werden kann, während die Schließstellung üblicherweise mit einem Fahrzustand des Fahrzeuges oder Anhängers eingenommen wird (Stellung "FAHRT") oder in einer Stellung "STOP" zwischen Positionen "HEBEN" und "SENKEN" eingenommen wird. Während die vorgenannten Positionen für das Heben und Senken bei üblichen Hebe-Senkventilen infolge manueller Betätigung durch den Fahrer eingenommen werden und unter Umständen lediglich eine Überführung von einer Stellung "STOP" in eine Stellung "FAHRT" automatisiert herbeigeführt wird, kann das Hebel-Senkventil für die erfindungsgemäße Ausgestaltung auch automatisiert angesteuert werden, um eine Sperrstellung und eine Öffnungsstellung einzunehmen zur Vermeidung eines zu hohen Luftverbrauches für auftretende Beschleunigungen.

Insbesondere ist das Ventil zur Steuerung der Be- und/oder Entlüftung unter Berücksichtigung des Beschleunigungszustandes Teil eines manuell betätigbaren Ventils zum Heben und/oder Senken eines Fahrzeugaufbaus ("Hebe-Senkventil"). Derartige Lösungen werden von der Anmelderin vertrieben unter der Marke "COLAS" oder "WLS" und sind bspw. in den Patentanmeldungen DE 41 20 825, DE 42 02 729, DE 10 2005 019 479 B3, DE 10 2005 017 590 und DE 10 2006 017 890 der Anmelderin beschrieben.

Für eine weitere Ausgestaltung der Erfindung ist das Hebe-Senkventil, über welches die Be-und/oder Entlüftung mindestens eines Federbalgs gesteuert wird, nicht einem einzelnen Federbalg bzw. einer Achse oder Seite des Fahrzeuges oder Anhängers zugeordnet. Vielmehr ist dieses stromaufwärts einer Verzweigungsstelle zu Federbälgen unterschiedlicher Achsen des Fahrzeuges oder des Anhängers angeordnet. Während gemäß US 6,935,625 B2 für das Unterbinden der Be- und Entlüftung von Federbälgen unterschiedlicher Achsen mehrere Ventile erforderlich sind, kann erfindungsgemäß der Bauaufwand sowie Steuerungsaufwand reduziert werden, indem ein einziges Ventil zur Vermeidung eines zu hohen Luftverbrauches an mehreren Achsen verwendet wird. Ist jeder Achse mindestens ein Niveauregelventil zugeordnet, hat die erfindungsgemäße Ausgestaltung zur Folge, dass über das Ventil lediglich die Belüftung, nicht jedoch die Entlüftung, beeinflusst werden kann, während gemäß US 6,935,625 B2 über das Sperrventil sowohl die Be- als auch die Entlüftung der Luftfeder erfolgt. Hier hat die vorliegende Erfindung erkannt, dass ein alleiniges Unterbinden der Belüftung mehrerer Luftfederbälge bereits ausreichend sein kann. Dies ist insbesondere dann der Fall, wenn
- während eines Bremsvorganges lediglich oder vorrangig ein Einfedern der Federbälge, weniger ein Ausfedern erfolgt oder
- zwar ein Ausfedern erfolgt, für welches das Niveauregelventil eine Entlüftung durchführt, aber erst mit Ende des Bremsvorganges und Überführung des Ventils in seine Öffnungsstellung eine ausgleichende einmalige Wiederauffüllung der Federbälge erfolgt.

Einen weiteren Vorteil hat die erfindungsgemäße Lösung für den Fall, dass der Anhänger mit einer Bremsung zum Stillstand kommt. Beispielsweise für den Fall, dass der Anhänger eine flüssige Ladung trägt, insbesondere ein Tank-Anhänger ist, verbleibt der Fahrer während des Stillstandes des Anhängers auf der Bremse. Für mit der Bremsung eingefederte Federbälge wirkt im Stillstand ohne ein zwischenzeitliches Lösen der Bremsen auf die Fahrzeugräder eine Reibkraft, welche zu einer Art "Verschränkung" derart führen kann, dass sich ein Niveau an den Achsen einstellt, welches ungleich dem statischen Niveau des Fahrzeuges ist, welches dem tatsächlichen Beladungszustand entspricht. Kommt es für derart "verschränktes" Fahrzeug oder Anhänger zu einer mehr oder weniger plötzlichen Entladung des Fahrzeuges oder Anhängers, beispielsweise in Form eines Herunterkippens einer Ladung, führt dieses zu einer Veränderung der nominellen Niveauhöhe, welche sich allerdings infolge der Verschränkung nicht unmittelbar einstellt. Sinkt infolge der Entladung die an den Rädern wirkende Normalkraft gegenüber dem Untergrund, kann die genannte Verschränkung dadurch aufgehoben werden, dass das Fahrzeugrad gegenüber dem Untergrund geringfügig rutscht. Beide vorgenannten Phänomene habe zur Folge, dass das Fahrzeug oder der Anhänger seine Niveauhöhe sprungartig oder allmählich vergrößert, so dass das Fahrzeug oder der Anhänger nach oben bewegt wird oder nach oben springt. Für den Fall, dass die Ladung von einem Hänger heruntergehoben wird, springt der Hänger förmlich der Ladung hinterher. Die genannte Bewegung führt dazu, dass der Luftfederbalg gelängt wird, was zu einer übermäßigen Strapazierung des Luftfederbalges führen kann. Schlimmstenfalls kann ein Anschlag erreicht und beschädigt werden. (Entsprechendes gilt, wenn unmittelbar im Anschluss an die Bremsung eine Parkbremse betätigt wird.) Erfindungsgemäß ist das Ventil stromaufwärts einer Verzweigungsstelle und insbesondere eines Niveauregelventils angeordnet, so dass trotz einer Sperrung des Ventils für das zuvor erläuterte Ausfedern des Luftfederbalges die Niveauregeleinrichtung wirksam werden kann, indem der Luftfederbalg entlüftet wird, so dass eine das Fahrzeug oder den Anhänger nach oben beschleunigende Kraft zumindest gemindert werden kann. Dies ist gemäß US 6,935,625 B2 nicht möglich, da das Sperrventil in diesem Fall stromabwärts des Niveauregelventils angeordnet ist.

Gemäß einer weiteren Ausgestaltung der Erfindung wird das Hebe-Senkventil zum Heben und/oder Senken eines Fahrzeugaufbaus vor oder mit Fahrbeginn automatisiert von einer Stellung "STOP" in eine Stellung "FAHRT" überführt. Zur Steuerung der Be- und/oder Entlüftung unter Berücksichtigung des Beschleunigungszustandes erfolgt eine automatisierte, temporäre Rückstellung in eine Stellung "STOP" des Hebe-Senkventils, wobei in dieser Stellung "STOP" die Be- und/oder Entlüftungsleitung zu dem Luftfederbalg gesperrt ist. Die automatisierte temporäre Rückstellung kann hierbei pneumatisch oder elektrisch erfolgen.

Gemäß einem weiteren Vorschlag der Erfindung besitzt das Hebe-Senkventil eine Sperrstellung. In diese Sperrstellung wird das Hebe-Senkventil verbracht, wenn ein erfasster Beschleunigungswert einen Schwellwert überschreitet. Bei einem derartigen Schwellwert kann es sich um einen konstanten, a-priori bekannten Wert handeln, der herstellerseitig vorgegeben werden kann. Ebenfalls möglich ist, dass ein derartiger Schwellwert im Betrieb adaptiert wird oder parameterabhängig gestaltet wird. Ebenfalls denkbar ist der Einsatz eines achsabhängigen Schwellwertes. Durch die Umschaltung des Hebe-Senkventils in eine Sperrstellung kann eine Be- oder Entlüftung des Federbalges vermieden werden. Insbesondere wird durch die Sperrstellung die Funktion der Niveauregeleinrichtung deaktiviert, so dass eine unter Umständen von der Niveauregeleinrichtung freigegebene Befüllung des Federbalges infolge des Hebe-Senkventils in der Sperrstellung nicht erfolgen kann.

Für ein weiteres erfindungsgemäßes Verfahren erfolgt eine Herbeiführung der Sperrstellung des Hebe-Senkventils in Abhängigkeit des erfassten Beschleunigungszustandes nur dann, wenn eine zusätzlich erfasste Geschwindigkeit unterhalb eines Schwellwertes liegt. Hierdurch kann zunächst dem oben angeführten Effekt einer Niveauänderung für den Stillstand des Fahrzeuges mit unterbundener Ausfederungswirkung entgegengewirkt werden. Eine weitere Beobachtung ist, dass für einen Rangierbetrieb oder eine Fahrt in der Stadt die Bremshäufigkeit unter Umständen höher ist als für die Fahrt auf der Landstraße oder Autobahn. Reichen die Zeiten für einen Niveauausgleich für einen Rangierbetrieb oder eine Stadtfahrt nicht aus, kann es für mehrere kurz aufeinanderfolgende Bremsungen zu einem "Aufpumpen" der Luftfederbälge kommen, so dass sich sukzessiv die Niveauhöhe erhöht. Somit besteht insbesondere unterhalb einer Schwellgeschwindigkeit ein erhöhter Bedarf an der erfindungsgemäßen Maßnahme. Entsprechendes gilt für eine fortdauernde Talfahrt, die auch über eine Bremshäufgkeitserfassung und/oder Bremsbetätigungserfassung detektiert und erfindungsgemäß berücksichtigt werden kann.

Entsprechend einer Weiterbildung der erfindungsgemäßen Luftfederungsanlage erfolgt eine Positionserfassung des Fahrzeuges. In diesem Fall kann die Sperrstellung nicht lediglich in Abhängigkeit von einem erfassten Beschleunigungszustand angesteuert werden. Vielmehr wird als weiteres Kriterium überprüft, ob sich das Fahrzeug in einem ausgewählten territorialen Gebiet bewegt. Wird beispielsweise erkannt, dass sich das Fahrzeug in einer Stadt bewegt oder in einem abschüssigen Gelände für eine Talfahrt, kann mit vergrößerter Zuverlässigkeit darauf rückgeschlossen werden, dass etwaige Niveauänderungen durch einen (wiederholten) Bremsbetrieb oder anderweitige Beschleunigungsvorgänge verursacht worden sind, so dass in diesem Fall die erfindungsgemäßen Maßnahmen eingesetzt werden können.

Gemäß einem weiteren Vorschlag der Erfindung erfolgt eine Herbeiführung einer Sperrstellung des Hebe-Senkventils in Abhängigkeit des erfassten Beschleunigungszustandes nur dann, wenn eine ermittelte Bremshäufigkeit oberhalb eines Schwellwertes liegt. Bei einer derartigen Bremshäufigkeit handelt es sich beispielsweise um die Zahl der Bremsvorgänge pro Zeiteinheit oder eine Bremsintensität bezogen auf eine Zeiteinheit. Auf Grundlage einer derart ermittelten Bremshäufigkeit kann die erfindungsgemäße Maßnahme gezielt dann eingesetzt werden, wenn mit unerwünschten, unter Umständen dauerhaften Niveauänderungen zu rechnen ist. Die Bremshäufigkeit kann dann als Indikator genutzt werden, wie viel Zeit besteht, um eine einmal eingetretene Niveauänderung zurückzuführen. Reicht die Zeit für die Rückführung der Niveauänderung nicht aus, ist die Bremshäufigkeit unter Umständen oberhalb eines Schwellwertes, so dass die erfindungsgemäße Maßnahme einer Herbeiführung einer Sperrstellung des Hebe-Senkventils in Abhängigkeit des Beschleunigungszustandes erforderlich ist. Eine Festlegung eines Schwellwertes für eine Bremshäufigkeit kann den Volumenstrom für eine Belüftung und/oder eine Entlüftung berücksichtigen - sind beispielsweise größere Leitungs-, Drossel- oder Düsenquerschnitte für die Be- oder Entlüftung verantwortlich, kann ein Bremsen mit einer höheren Häufigkeit auftreten, ohne dass es zu einer dauerhaften, unerwünschten Niveauänderung kommt, während der Einsatz kleinerer Be- und/oder Entlüftungs-Volumenströme einen früheren Einsatz der erfindungsgemäßen Maßnahmen erfordert.

Gemäß einem weiteren Vorschlag der Erfindung erfolgt die Herbeiführung einer Sperrstellung des Hebe-Senkventils in Abhängigkeit eines Bremsbetätigungssignals oder Bremslichtsignals. Dies ist bspw. dann möglich, wenn das Hebe-Senkventil elektrisch angesteuert ist. In diesem Fall kann ein ohnehin vorliegendes elektrisches Signal für die Bremsbetätigung oder das Bremslicht durch eine geeignete Steuereinrichtung zur Ansteuerung des Hebe-Senkventils, unter Umständen unter geeigneter Aufbereitung, genutzt werden. Ebenfalls möglich ist auch der Einsatz eines elektrisch vorgesteuerten Hebe-Senkventils, für welches das Bremsbetätigungssignal oder Bremslichtsignal als Vorsteuersignal eingesetzt werden kann. Hierbei kann das Bremsbetätigungssignal oder Bremslichtsignal ein "binäres" Signal sein, welches somit Aufschluss gibt, ob die Bremse betätigt ist oder nicht. Ebenfalls möglich ist, dass das Bremsbetätigungssignal oder Bremslichtsignal ein digitales oder analoges Signal ist, so dass dieses Signal auch Aufschluss über die Stärke der Bremsbetätigung gibt. Dieses Signal kann proportional an eine Steuerung für das Hebe-Senkventil weitergegeben werden. Ebenfalls möglich ist, dass die Auswertung des Bremsbetätigungssignales durch Vergleich mit einem Schwellwert erfolgt, so dass nur für eine hinreichend starke Bremsbetätigung die erfindungsgemäßen Maßnahmen Einsatz finden. Eine besonders einfache Ausgestaltung der Erfindung ist gegeben, wenn eine Bremsdruck unmittelbar zur Ansteuerung des Sperrventils genutzt wird.

Neben der Betätigung der Bremse kann in entsprechender Weise auch eine Bremswirkung durch Einsatz einer Motorbremse ausgenutzt werden. Ebenfalls denkbar ist der Einsatz eines Signales von einem Retarder. Als alternative oder kumulative Maßnahme ist die Auswertung eines Signales über einen einsetzenden Schubbetrieb möglich, der indiziert, dass eine Motorbremse aktiviert ist. Ebenfalls möglich ist die Nutzung eines Getriebesignales, wobei beispielsweise ein Drehmoment in dem Getriebe über einen Sensor erfasst werden kann und mit einer Umkehr des Vorzeichens des wirkenden Drehmomentes der Wechsel in einen Schubbetrieb der Brennkraftmaschine erfasst wird. Schließlich kann auch die gewählte Schaltstrategie, beispielsweise ein Herunterschalten eines Gangs in Verbindung mit der aktuellen Drosselklappenstellung: verwendet werden.

Während über die zuvor erläuterten Maßnahmen ein tatsächlich vorhandener Bremszustand ausgewertet wird, schlägt eine weitere Ausgestaltung der Erfindung vor, einen zukünftig zu erwartenden Beschleunigungszustand zu erfassen. Beispielsweise kann über ein Navigationssystem a priori erkannt werden, dass eine zukünftige Talfahrt zu erwarten ist, in der wiederholte Bremsvorgänge erforderlich sind. Ebenfalls möglich ist die Erfassung der Annäherung eines Fahrzeuges an ein Wohngebiet oder eine Ampel, was ebenfalls die Wahrscheinlichkeit eines zukünftigen Bremsvorganges erhöht. Erfindungsgemäß kann mit der Ermittlung eines derartigen zukünftig zu erwartenden Beschleunigungszustandes unter Umständen bereits vor dem Auftreten des zu erwartenden Beschleunigungszustandes eine Herbeiführung einer Sperrstellung des Hebe-Senkventils erfolgen. Weitere Möglichkeiten für die Erfassung eines zukünftig zu erwartenden Beschleunigungs- oder Bremszustandes sind gegeben für den Einsatz eines Abstandsystems mit automatischer Erfassung des Abstandes zu einem vorausfahrenden Fahrzeuges oder eines Hindernisses. Entsprechend Einsatz finden können die erfindungsgemäßen Maßnahmen im Zusammenhang mit einer sogenannten elektronischen Deichsel, für welches zwei Fahrzeuge nicht mechanisch, sondern lediglich über ein Abstandsystem miteinander gekoppelt sind, so dass das hinterherfahrende Fahrzeug ohne Fahrer sein kann.

Entsprechend einem weiteren Vorschlag der Erfindung ist eine elektronische Steuereinrichtung vorgesehen. Das Hebe-Senkventil kann in diesem Fall als elektrisch betätigbares Steuerventil oder als elektrisch betätigtes Vorsteuerventil ausgebildet sein, welches von der elektronischen Steuereinrichtung angesteuert ist. Unter Einsatz einer derartigen elektronischen Ansteuerung ist die Möglichkeit einer flexiblen Berücksichtigung einer vergrößerten Anzahl von Betriebsgrößen des Fahrzeuges ermöglicht, so dass die Beeinflussung der Be- und/oder Entlüftung durch das Hebe-Senkventil unter Berücksichtigung des Beschleunigungszustandes noch besser an die jeweiligen Fahrbedingungen anpassbar ist.

Gemäß einer besonderen Ausgestaltung dieses Gedankens nimmt die Steuereinrichtung eine Ansteuerung des Hebe-Senkventils unter Berücksichtigung eines Signals oder Betriebszustandes eines ABS- oder EBS-Systems vor. In einem derartigen System liegt ohnehin ein Signal über einem Beschleunigungszustand vor, welches somit multifunktional nicht nur für die Bremsansteuerung, sondern auch für die Regelung der Befüllung des Luftfederbalges genutzt werden kann.

Eine besonders einfache Ausgestaltung der erfindungsgemäßen Luftfederungsanlage ergibt sich, wenn das Hebe-Senkventil pneumatisch gesteuert wird. Hierbei kann als Steuerdruck des Hebe-Senkventils ein Drucksignal verwendet werden, welches mit dem Bremsdruck korreliert oder diesem entspricht.

Entsprechend einer weiteren alternativen oder kumulativen erfindungsgemäßen Maßnahme wird der Beschleunigungszustand aus einem Zeitsignal der Einfederung des Luftfederbalges ermittelt. Dieser Ausgestaltung liegt die Erkenntnis zugrunde, dass während des Betriebes des Kraftfahrzeuges tatsächlich erforderliche Niveauregelvorgänge verhältnismäßig langsam ablaufen, während eine Niveauänderung, die durch eine Beschleunigung des Fahrzeuges verursacht ist, verhältnismäßig schnell erfolgt. Beispielsweise durch Auswertung des Zeitsignals in Form der Änderungsgeschwindigkeit der Einfederung des Luftfederbalgs bzw. der Niveauhöhe kann damit qualitativ eine tatsächlich erforderliche Niveauänderung von einer durch die Beschleunigung verursachten, nicht auszuregelnden Niveauänderung qualitativ unterschieden werden. Andererseits kann auf Grundlage einer Änderungsgeschwindigkeit ein "vorsichtiger", lange andauernder Bremsvorgang unterschieden werden von einer kurzen, plötzlichen und starken Bremsung, für die vorrangig der erfindungsgemäße Eingriff in die Be- oder Entlüftung des Luftfederbalges erfolgen könnte.

Einem weiteren Vorschlag der Erfindung liegt die Erkenntnis zugrunde, dass eine "echte Niveauänderung" verhältnismäßig langsam verläuft, während eine durch eine Beschleunigung verursachte Niveauänderung verhältnismäßig schnell verläuft. Mit dieser Erkenntnis schlägt die Erfindung vor, über das Hebe-Senkventil eine Niveauregeleinrichtung nur nach vorgegebenen konstanten oder veränderlichen Intervallen für kurze Zeitspannen "freizuschalten". Auf diese Weise kann mit einfachen Mitteln eine effiziente und bedarfsgerechte Reduzierung des Druckluftverbrauchs erzielt werden, ohne dauerhafte Abweichungen von einem Sollniveau hinnehmen zu müssen.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählte Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Fahrzeug oder einen Anhänger mit einer Luftfederungsanlage.
- **Fig. 2**: zeigt stark schematisiert eine Druckluftanlage für eine Luftfederungsanlage.
- **Fig. 3 - 7**: zeigen schematische Darstellungen von Druckluftanlagen mit einer Luft- federungsanlage in unterschiedlichen Ausgestaltungen.
- **Fig. 8 - 12**: zeigen schematisch Druckluftanlagen mit einer Luftfederungsanlage für einen Anhänger in unterschiedlichen Ausführungsformen.
- **Fig. 13 - 16**: zeigen unterschiedliche Ausführungsformen eines Hebe-Senkventils, welches einem Niveauregelventil zur Regelung von Luftfederbälgen vor- oder nach- geschaltet sein kann.
- **Fig. 17 - 19**: zeigen unterschiedliche Ausführungsformen mit einem Niveauregelventil, wel- ches eingangsseitig nach Maßgabe eines Bremsdruckes pneumatisch aktivierbar und deaktivierbar ist.
- **Fig. 20 - 22**: zeigen unterschiedliche Ausführungsformen mit einem Niveauregelventil, wel- ches ausgangsseitig nach Maßgabe eines Bremsdruckes pneumatisch aktivier- bar und deaktivierbar ist.
- **Fig. 23 - 25**: zeigen weitere Ausführungsformen mit einem Niveauregelventil, welches ein- gangsseitig über ein elektrisch angesteuertes Ventil aktivierbar und deaktivierbar ist.
- **Fig. 26 - 28**: zeigen weitere Ausführungsformen mit einem Niveauregelventil, welches aus- gangsseitig über ein elektrisch angesteuertes Ventil aktivierbar und deaktivierbar ist.

### FIGURENBESCHREIBUNG

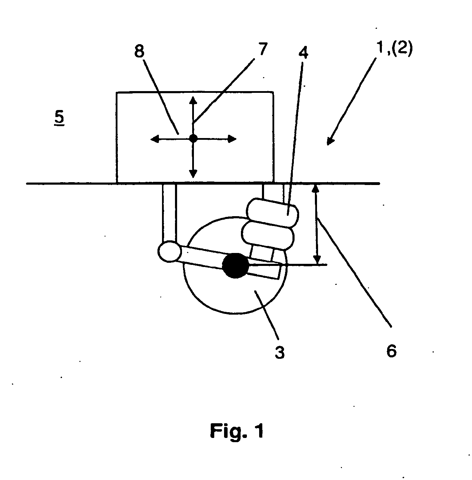

**Fig. 1** zeigt ein Fahrzeug 1 oder einen Anhänger 2, dessen Rad 3 oder Achse über mindestens eine Luftfeder 4, hier ein Luftfederbalg, gegenüber einem Fahrzeugaufbau 5 abgestützt ist. Im Betrieb des Fahrzeuges 1 oder Anhängers 2 kann die Luftfeder 4 ein- und ausfedern, wodurch sich eine Niveauänderung 6 ergibt. Im Betrieb des Fahrzeuges treten vertikale Beschleunigungen 7 und horizontale Beschleunigungen 8 auf. Diese können verursacht sein durch eine ungleichförmige Bewegung des Fahrzeuges 1 oder Anhängers 2, also eine Erhöhung der Geschwindigkeit des Fahrzeuges, einen Bremsvorgang und/oder eine Kurvenfahrt, die eine Wank-, Gier-, oder Nickbewegung des Fahrzeuges 1 oder Anhängers 2 zur Folge haben können und somit auf Beschleunigungen 7, 8 führen können. Eine weitere Ursache insbesondere einer vertikalen Beschleunigung 7 können Fahrbahnunebenheiten sein, die über das Rad 3 und die Aufhängung sowie Luftfeder 4 in Richtung des Fahrzeugaufbaus 5 u. U. gedämpft und gefedert, übertragen werden.

Beispielhaft wird eine Niveauänderung 6 für einen Bremsvorgang beschrieben: Eine Abbremsung des Fahrzeuges 1 oder Anhängers 2 hat eine Nickbewegung zur Folge, die eine Einfederung einer einer vorderen Achse zugeordneten Luftfeder 4 sowie ein Ein- oder Ausfedern einer einer hinteren Achse zugeordneten Luftfeder 4 zur Folge haben kann. Andererseits kann bei Kurvenfahrt eine Belastung des kurvenäußeren Rades und eine Entlastung des kurveninneren Rades auftreten mit einer hiermit verbundenen Einfederung des kurvenäußeren Rades und Ausfederung des kurveninneren Rades. Grundsätzlich sind geeignete Maßnahmen getroffen, um die Druckverhältnisse zwischen dem kurveninneren und kurvenäußeren Rad bei Kurvenfahrt anzupassen oder es sind Stabilisatoren eingesetzt, welche das Maß der Ein- und Ausfederung bei Kurvenfahrt beeinflussen oder begrenzen.

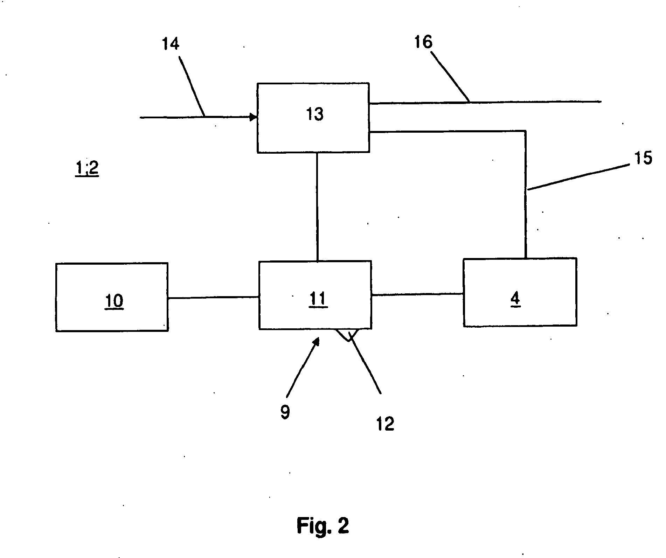

**Fig. 2** zeigt eine schematische Darstellung einer Luftfederungsanlage 9. Die Luftfederungsanlage 9 besitzt eine Druckluftversorgungseinrichtung 10, bei der es sich um einen Behälter und/oder einen Kompressor handeln kann. Von der Drucktuftversorgungseinrichtung 10 wird mindestens eine Ventilbaugruppe 11 gespeist, nach deren Maßgabe einerseits die Zufuhr von Druckluft zu mindestens einer Luftfeder 4 steuer- oder regelbar ist und andererseits eine Entlüftung der Luftfeder 4 über eine Entlüftung 12 steuerbar ist. Die Betriebsstellungen der Ventilbaugruppe 11 werden über eine Steuereinrichtung 13 gesteuert oder geregelt, wobei der Steuereinrichtung 13 Signale 14 zugeführt werden, beispielsweise ein Gaspedalsignal und/oder ein Bremssignal oder anderweitige Betriebssignale des Fahrzeuges, manuelle Betätigungssignale zu einem Heben oder Senken eines Anhängers, Betriebssignale einer Brennkraftmaschine oder anderer Komponenten. Unter Berücksichtigung der Signale 14 ermittelt die Steuereinrichtung 13 geeignete Steuersignale für die Ventilbaugruppe 11. Neben einer elektrischen Ansteuerung der Ventilbaugruppe 11 durch die Steuereinrichtung 13 ist ebenfalls eine pneumatische Steuerung oder Regelung der Ventilbaugruppe 11 möglich oder eine elektro-pneumatische Steuerung. Die Steuereinrichtung 13 kann separat von der Ventilbaugruppe 11 ausgebildet sein oder Teil der Ventilbaugruppe 11 sein, wobei auch eine Aufteilung der Steuereinrichtung in einzelne, den Komponenten der Ventilbaugruppe 11 zugeordneten Ventilaggregate möglich ist. Der Steuereinrichtung 13 wird ein Signal 15 zugeführt, bei dem es sich beispielsweise um eine Niveauänderung 6 handelt. Für den Fall einer Niveauregulierung ermittelt die Steuereinrichtung 13 aus dem Signal 15 ein geeignetes Signal zur Beaufschlagung der Ventilbaugruppe 11, so dass ein Niveau der Luftfeder 4 konstant bleibt oder in eine gewünschte Richtung verändert wird. Erfindungsgemäß wird der Steuereinrichtung 13 auch ein Signal 16 zugeführt, bei dem es sich um ein mit einem Beschleunigungszustand korrelierendes Signal handelt. Beispielsweise handelt es sich bei dem Signal 16 um ein Bremssignal. Unter Berücksichtigung des Signales 16 wird erfindungsgemäß über die Steuereinrichtung 13 die Ventilbaugruppe 11 geeignet angesteuert. Hierbei wird insbesondere in dem Fall, dass das Signal 16 indiziert, dass eine Bremsung erfolgt oder eine Bremsung mit einer einen Schwellwert überschreitenden Beschleunigung erfolgt, über die geeignete Ansteuerung durch die Steuereinrichtung 13 die Ventilbaugruppe 11 derart angesteuert, dass eine Be- und/oder Entlüftung der Luftfeder 4 in verändertem, beispielsweise gedrosseltem Ausmaß erfolgt oder überhaupt nicht erfolgt, wozu ein die Be- und/oder Entlüftung der Luftfeder 4 regulierendes Ventil in eine Sperrstellung gebracht werden kann.

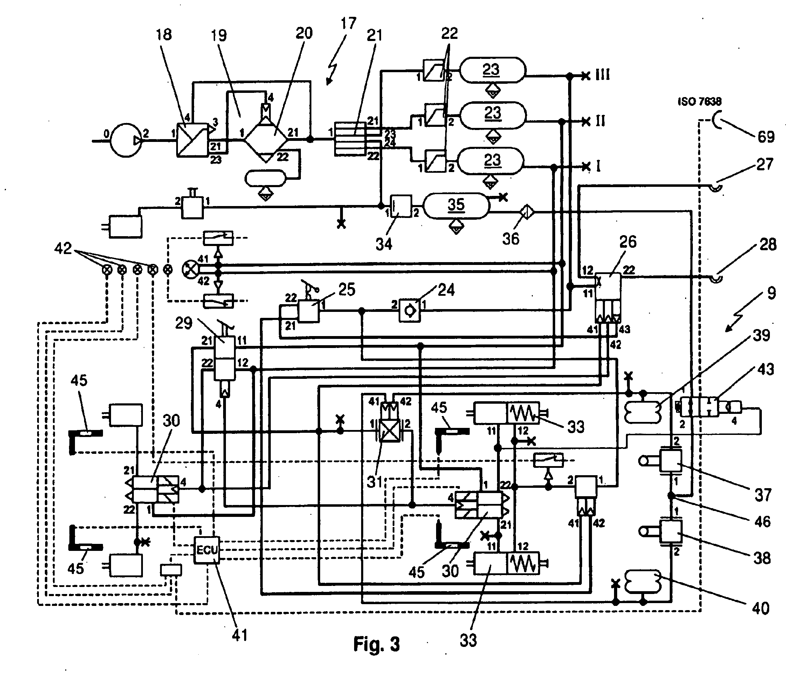

**Fig. 3** zeigt eine beispielhafte Konkretisierung einer derartigen Druckluftanlage 17, die Elemente zur Druckluftbereitstellung, zur Druckluftspeicherung, eine Druckluftsenke, eine zentrale und/oder mehrere dezentrale Steuereinrichtungen, Ventilelemente und -baugruppen zur Beeinflussung des Druckluftflusses und Verbraucher, wie einen Betriebsbremskreis, einen Feststellbremskreis und eine Luftfederungsanlage, aufweisen kann. Gemäß Fig. 3 fördert ein Kompressor 18 Luft aus einer Drucksenke oder der Umgebung. Ausgangsseitig des Kompressors 18 wird die Druckluft über einen Druckregler 19, einen Lufttrockner 20 und ein Mehrkreisschutzventil 21 Ausgängen für unterschiedliche Verbraucherkreise zugeführt: Ausgehend von dem Mehrkreisschutzventil 21 wird über ein Druckbegrenzungsventil 22 und einen Druckluftbehälter 23 ein Verbraucherkreis III gespeist, dessen Druck über ein Rückschlagventil 24 einem Handbremsventil 25 zugeführt ist. Der Verbraucherkreis III ist weiterhin über ein Anhängersteuerventil 26 in an sich bekannter Weise mit einem Vorratsleitungsanschluss 27 und einem Bremsleitungsanschluss 28 verbunden. Dem Anhängersteuerventil 26 werden als Steuerdrücke ein Ausgangsdruck des Handbremsventils 25, ein Ausgangsdruck eines Fußbremsventils 29 sowie ein anderer Ausgangsdruck des Fußbremsventils 29 zugeführt.

Die Drücke der Verbraucherkreise I und II sind EBS- oder ABS-Einheiten 30 für unterschiedliche Achsen zugeführt, wobei die Einheiten 30 als Steuerdrücke Ausgangsdrücke des Fußbremsventils 20 erhalten, ggf. unter Zwischenschaltung eines ALB-Ventils 31 für eine automatische lastabhängige Bremskraftsteuerung. Die Einheiten 30 beaufschlagen Betriebsbremszylinder 32 bzw. Bremskammern eines Kombi-Bremszylinders 33. Das ALB-Ventil 31 erhält als Steuerdruck den Druck der im Folgenden noch näher beschriebenen Luftfederungsanlage 9.

Ein Ausgang des Mehrkreisschutzventils 21 speist über ein Überströmventil 34 einen Druckluftbehälter 35, der über einen Filter 36 sowie auf jeder Fahrzeugseite über ein Niveauregelventil 37, 38 einen Luftfederbalg 39, 40 speist. Der Druck der Luftfederbälge 39, 40 wird als Steuerdruck dem ALB-Ventil 31 zugeführt. Mit dem Behälter 35, den Niveauregelventilen 37, 38 und den Luftfederbälgen 39, 40 ist eine Luftfederungsanlage 9 gebildet. Einer elektronischen Steuereinrichtung 41 werden - neben anderen, nicht dargestellten Signalen - die Signale von Radsensoren 45 zugeführt. Die Steuereinrichtung 41 steuert Statusanzeigeelemente, insbesondere Warnlampen 42 an, beispielsweise für eine Statusanzeige oder Warnanzeige der Betriebsbremse. Über Steuerleitungen ist die Steuereinrichtung 41 mit mindestens einer Einheit 30 verbunden.

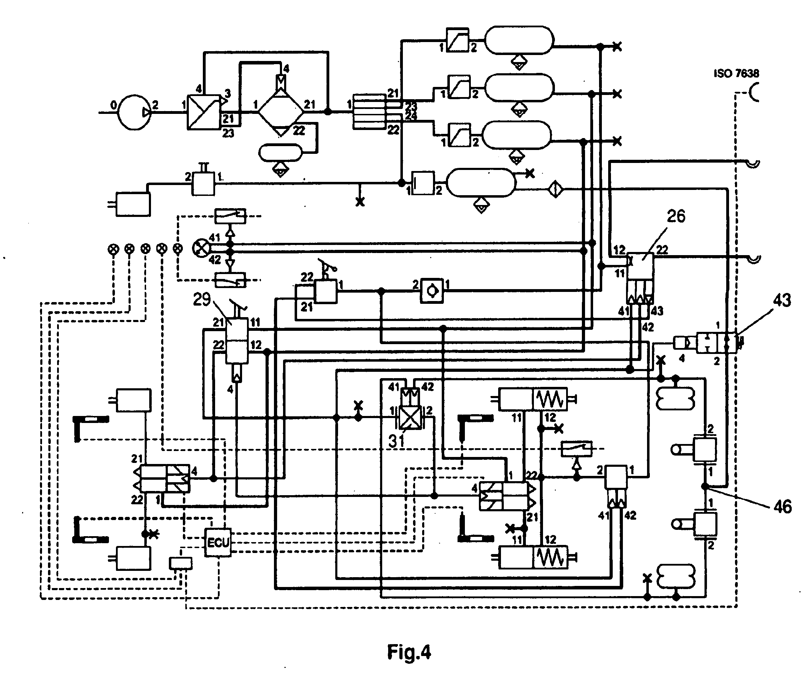

Weitere Merkmale der Druckluftanlage 17 gemäß Fig. 3 sind dem Fachmann aus den verwendeten Schaltsymbolen für die beteiligten pneumatischen, elektrischen und elektropneumatischen Bauelemente und aus der Verschaltung der Bauelemente miteinander gemäß Fig. 3 ersichtlich, wobei je nach Bedarf Modifikationen der eingesetzten Bauelemente und deren Verbindung miteinander möglich ist. Beispielsweise ist grundsätzlich für die dargestellten Elemente eine pneumatische oder elektrische Ausbildung oder Ansteuerung möglich. Der grundsätzliche Aufbau der Druckluftanlage 17 entspricht für die Ausführungsformen gemäß **Fig. 4 bis 7** den obigen Ausführungen zu Fig. 3.

Gemäß Fig. 3 ist in die Luftfederungsanlage 9 ein 2/2-Wegeventil, hier in Ausführung als Sperrventil 43 mit pneumatischer Ansteuerung, integriert. Selbstverständlich ist auch ein abweichendes Ventil einsetzbar, beispielsweise mit mehr Schaltstellungen und/oder mit einer Öffnungsstellung, einer gedrosselten Stellung und einer Schließstellung. Gemäß Fig. 3 ist das Sperrventil 43 stromaufwärts von den beiden Niveauregelventilen 37, 38 vor einer Verzweigungsstelle 46 in einer gemeinsamen Zuführleitung vorgeordnet, aber unmittelbar stromabwärts des Filters 36 angeordnet. Ohne anliegenden Steuerdruck an dem Sperrventil 43 befindet sich dieses in der in Fig. 3 dargestellten Schaltstellung, welche als Öffnungsstellung ausgebildet ist. In dieser Stellung werden die Niveauregelventile 37, 38 mit Druckluft versorgt, so dass diese im Zuge einer Niveauregelung eine Befüllung der Luftfederbälge 39, 40 vornehmen können. Für hinreichenden Druck an dem Steueranschluss des Sperrventils 43 wird das Sperrventil 43 in die in Fig. 3 nicht dargestellte Schaltstellung verbracht, in der die Verbindung zwischen den Niveauregelventilen 37, 38 und dem Druckluftbehälter 35 unterbrochen ist.

Der Steueranschluss des Sperrventils 43 ist pneumatisch verbunden mit dem Ausgang der EBS-/ABS-Einheit 30, der die Betriebsbremskammern der Kombi-Bremszylinder 33 mit Druckluft versorgt. Dies hat zur Folge, dass mit einer Erzeugung einer Bremswirkung in dem Kombi-Bremszylinder 33 oder mit Überschreiben eines hinreichenden Druckes in den Betriebsbremskammern des Kombi-Bremszylinders 33, der durch die Auslegung des Sperrventils 43 bzw. der Feder desselben vorgegeben ist, das Sperrventil 43 pneumatisch in seine Schließstellung verbracht werden kann. Somit kann mit einsetzender Bremsung oder hinreichend starker Bremsung das Sperrventil 43 geschlossen werden, so dass ein Befüllen der Luftfederbälge 39, 40 über die Niveauregelventile 37, 38 nicht mehr erfolgen kann.

Bei ansonsten Fig. 3 entsprechender Ausgestaltung ist abweichend gemäß Fig. 4 dem Sperrventil 43 als Steuerdruck der Ausgangsdruck des Fußbremsventils 29, hier der Druck zwischen dem Fußbremsventil 29 und dem ALB-Ventil 31, zugeführt, der auch einem Steuerdruck des Anhängersteuerventils 26 entspricht. Hierdurch ist die Ansteuerung des Sperrventils 43 unmittelbar mit der Betriebsstellung des Fußbremsventils 29 verknüpft.

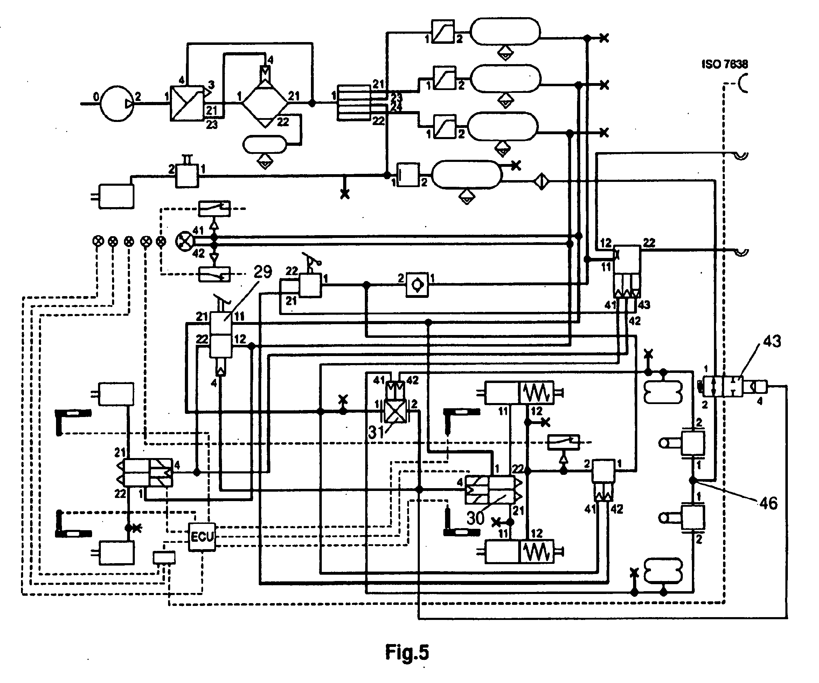

Für das in Fig. 5 dargestellte Ausführungsbeispiel, welches ansonsten im Wesentlichen der Ausführungsform gemäß Fig. 3 entspricht, wird als Steuerdruck für das Sperrventil 43 der Druck zwischen einem Steueranschluss der EBS-/ABS-Einheit 30 und dem ALB-Ventil 31 verwendet, welcher für das dargestellte Ausführungsbeispiel einem Steuerdruck des Fußbremsventils 29 entspricht.

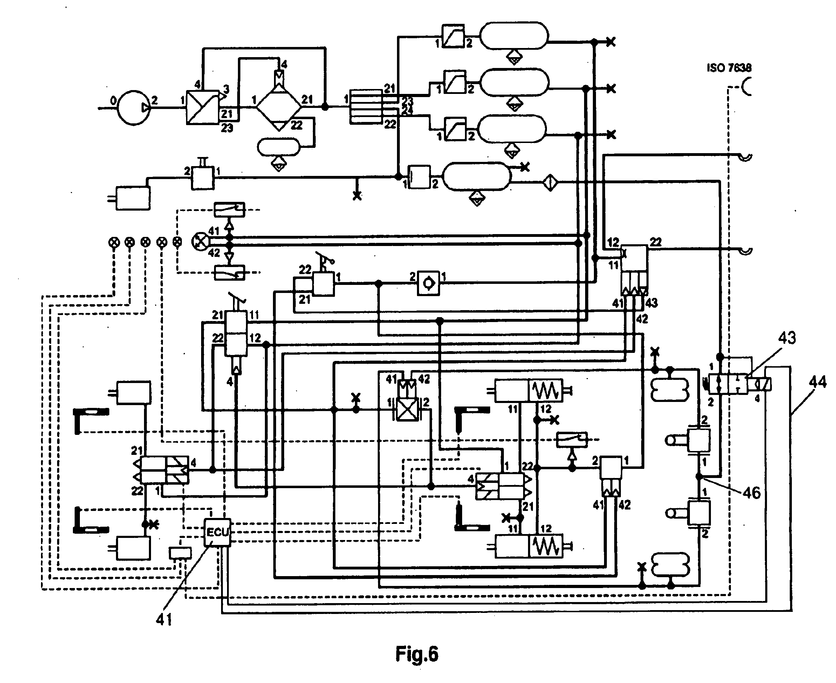

Bei ansonsten entsprechender Ausführung ist das Sperrventil 43 für das in Fig. 6 dargestellte Ausführungsbeispiel elektromagnetisch vorgesteuert, wobei das Steuersignal für die überführung von der in Fig. 6 dargestellten, nicht elektrisch aktivierten Öffnungsstellung in die Sperrstellung von der Steuereinheit 41 erzeugt wird und über eine Steuerleitung 44 dem Sperrventil 43 zugeführt wird. Ein geeignetes Steuersignal wird hierbei von der Steuereinheit 41 ermittelt, welches für eine Bremsbetätigung oder eine Bremsbetätigung in ausreichendem Ausmaß das Sperrventil 43 in die nicht in Fig. 6 dargestellte Sperrstellung verbringen soll. Beispielsweise kann die Steuereinheit hierzu eine Geschwindigkeitsänderung, ein Bremsbetätigungssignal, ein Bremsdrucksignal oder ein anderes vergleichbares Signal auswerten. Ebenfalls möglich ist die Auswertung eines Abstandswamsystems, so dass für den Fall, dass sich vor dem bewegten Kraftfahrzeug in einer geschwindigkeitsabhängigen Entfernung ein Hindernis oder ein weiteres Fahrzeug befindet, eine hohe Wahrscheinlichkeit einer zukünftigen Bremsung vorhergesagt werden kann und das Sperrventil über die Steuereinheit 41 in die Sperrstellung gesteuert wird.

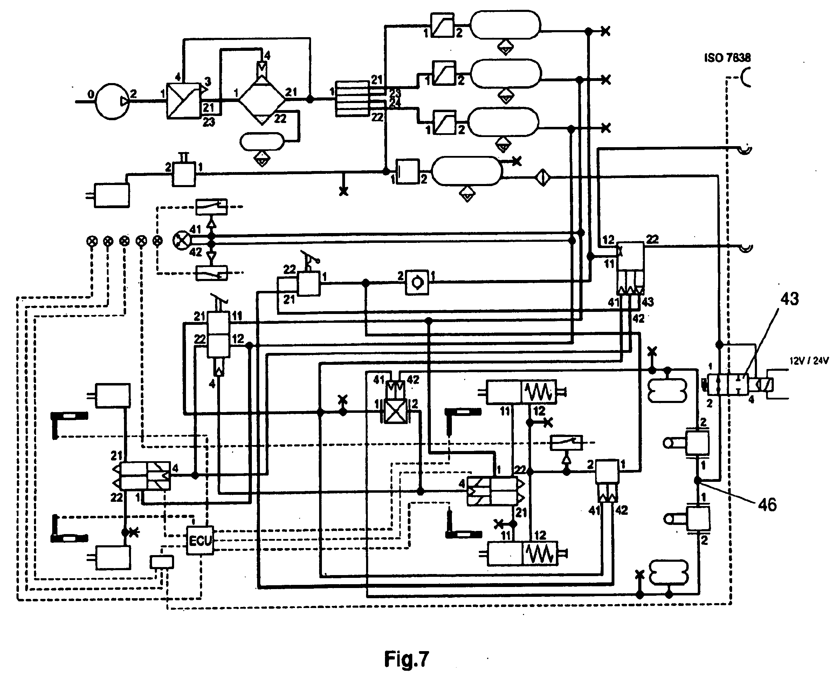

Schließlich zeigt Fig. 7 bei ansonsten entsprechender Ausgestaltung den Einsatz eines 12 Volt-oder 24 Volt-Bremssignales als Steuersignal für das Sperrventil 43. Hierbei kann es sich auch um ein Bremslichtsignal handeln, so dass gleichzeitig mit der Erzeugung eines Bremslichtes eine Befüllung der Luftfederbälge 39, 40 über die Niveauregelventile 37, 38 in Folge gesperrter Zuführleitung unterbunden ist.

In den Fig. 3-7 ist das Verfahren beispielhaft für Luftfederbälge 39, 40 einer Achse dargestellt und im Zusammenhang mit der Herbeiführung einer Bremsbeschleunigung. Entsprechend kann der Aufbau und das Verfahren eingesetzt werden für einen einzelnen Luftfederbalg, Luftfederbälge einer Fahrzeugseite oder sämtliche Luftfederbälge mehrerer oder sämtlicher Fahrzeugachsen.

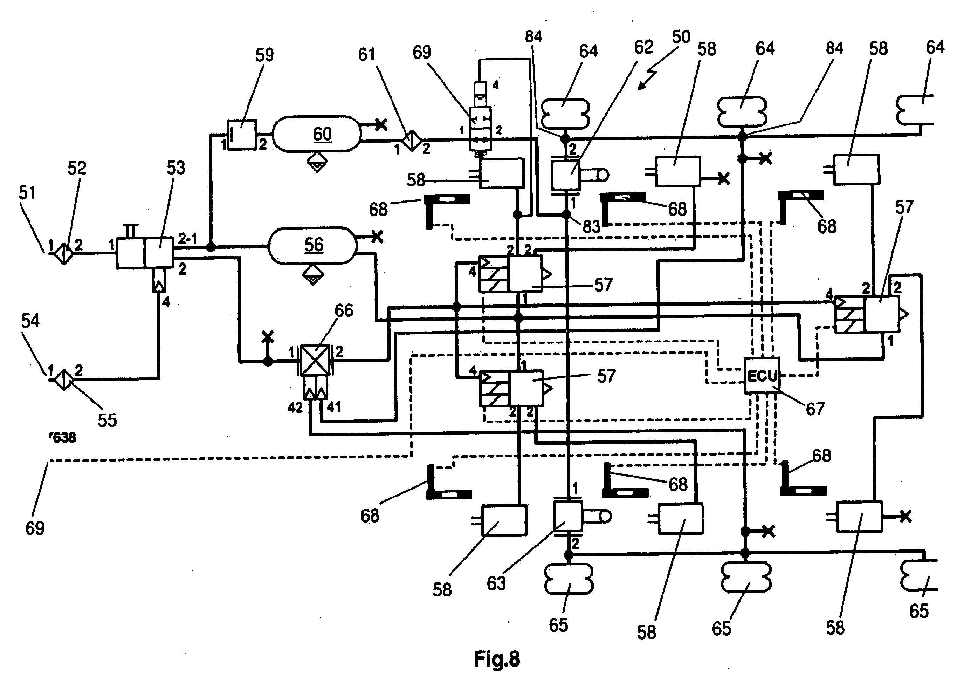

**Fig. 8** zeigt eine Druckluftanlage 50 für einen Anhänger. Die Druckluftanlage 50 besitzt eine Druckluftversorgungseinheit, hier eine Versorgungsleitung mit zugeordnetem Druckluftbehälter, eine Steuereinheit, Ventilelemente zur Beeinflussung der Druckluftströme, Luftfederbälge und Bremseinheiten.

Ein Vorratsleitungsanschluss 51 ist unter Zwischenschaltung eines Filters 52 mit einem Eingang eines Anhängerbremsventils 53 mit Notbremsfunktion verbunden, während ein Bremsleitungsanschluss 54 unter Zwischenschaltung eines Filters 55 mit einem Steueranschluss des Anhängerbremsventils 53 verbunden ist. Ein Ausgang des Anhängerbremsventils 53 ist über einen Druckluftbehälter 56 über EBS-/ABS-Einheiten 57 mit Betriebsbremsen 58 unterschiedlicher Achsen verbunden. Derselbe Ausgang des Anhängerbremsventils 53 ist über ein Überströmventil 59 mit einem Druckluftbehälter 60 verbunden. Der Druckluftbehälter 60 speist über einen Filter 61 eine Verzweigungsstelle 83 und jeweils ein Niveauregelventil 62, 63, welches einer Seite des Anhängers zugeordnet ist, über Verzweigungsstellen 84 parallelgeschaltete Luftfederbälge 64, 65 einer Seite des Anhängers. Ein weiterer Ausgang des Anhängerbremsventils 53 ist über ein ALB-Ventil 66 mit Steueranschlüssen der ABS-/EBS-Einheiten 57 verbunden.

Einer Steuereinheit 67 werden elektrische Signale von Raddrehzahlsensoren 68 zugeführt. Steuersignale der Steuereinheit 67 werden den ABS-/EBS-Einheiten 57 zugeführt sowie dem ALB-Ventil 66. Weiterhin ist die Steuereinheit 67 über eine Schnittstelle 69 mit einer Steuereinheit 41 eines mit dem Anhänger zu verbindenden Fahrzeuges verbindbar.

Für das in Fig. 8 dargestellte Beispiel ist zwischen die Druckluftbehälter 60 und die Luftfederbälge 64 ein 2/2-Wegeventil, hier ein Sperrventil 69, zwischengeschaltet, wobei für Ausführungsmöglichkeiten für das Sperrventil 69 das zu dem Sperrventil 43 Gesagte gilt. Für den Fall eines pneumatisch angesteuerten Sperrventils 69 wird dem Sperrventil 69 als Steuerdruck ein Bremsdruck einer Betriebsbremse 58, also ein Ausgangsdruck einer ABS-/EBS-Einheit 57, zugeführt.

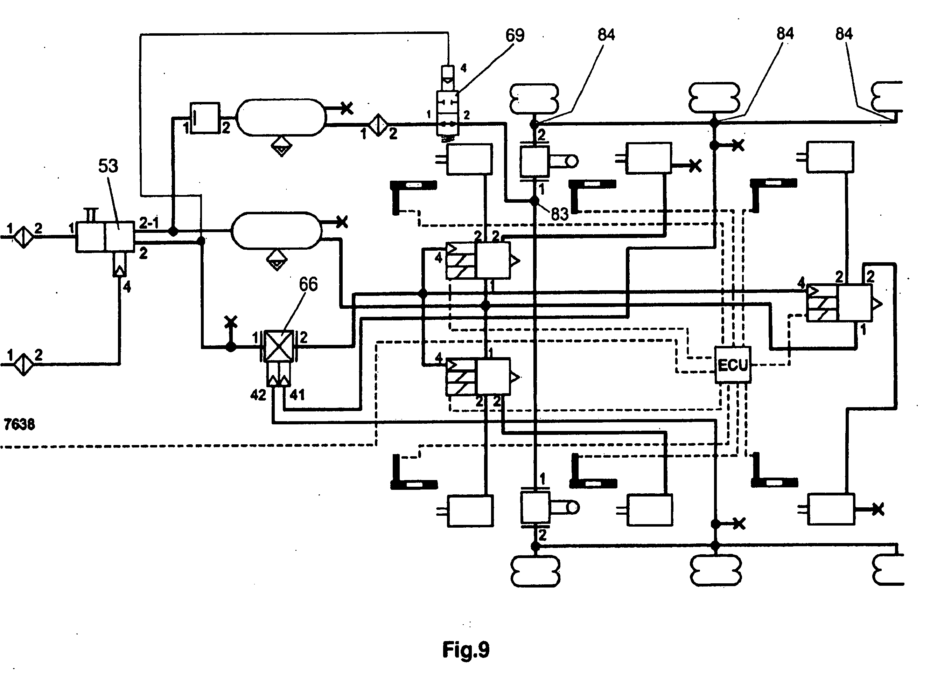

Abweichend hierzu wird bei ansonsten Fig. 8 entsprechender Ausgestaltung für das in **Fig. 9** dargestellte Ausführungsbeispiel als Steuerdruck für das Sperrventil 69 der Betriebsbrems-Ausgangsdruck des Anhängerbremsventils 53 verwendet, also der Druck zwischen dem Anhängerbremsventil 53 und dem ALB-Ventil 66.

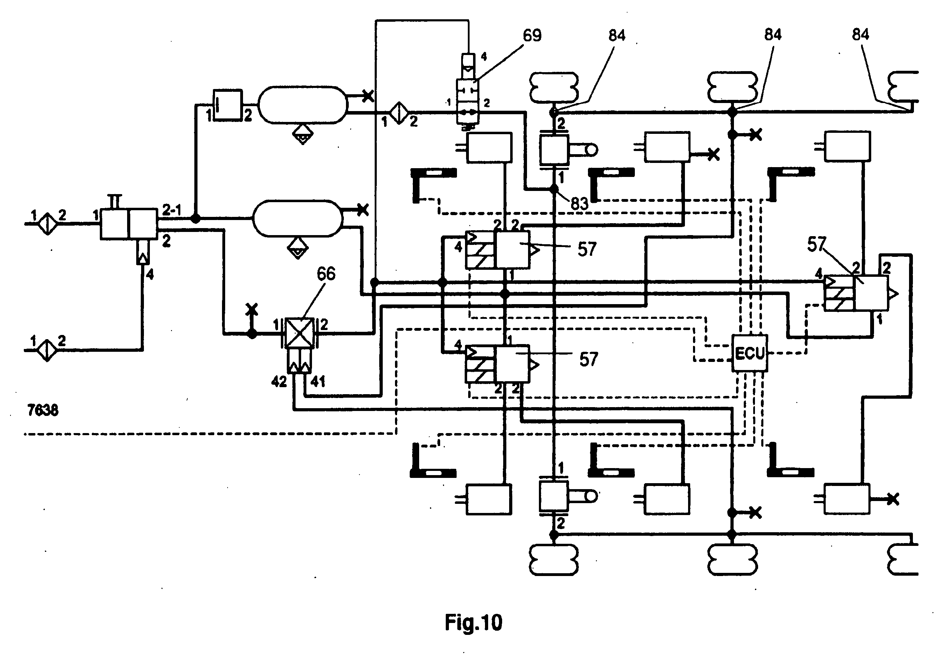

In alternativer Ausgestaltung gemäß **Fig. 10** kann als Steuerdruck für das Sperrventil 69 auch der Bremsdruck ausgangsseitig des ALB-Ventils 66, der als Steuerdruck den ABS-/EBS Einheiten 57 zugeführt wird, abgezweigt und genutzt werden.

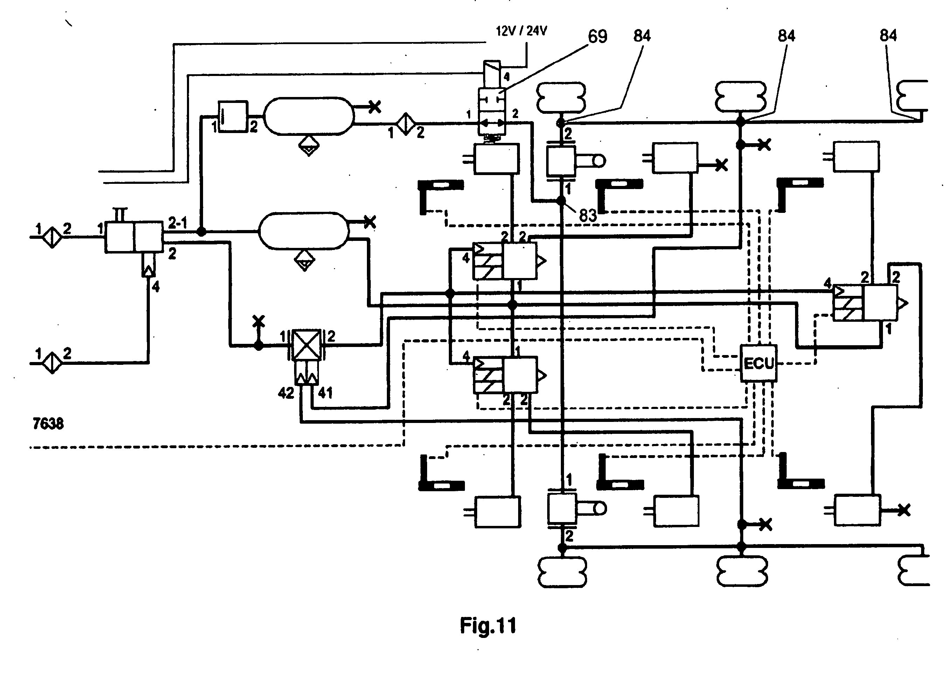

**Fig. 11** zeigt die rein elektrische Steuerung des Sperrventils 69 über ein elektrisches 12 V/24 V-Steuersignal, bei dem es sich um ein Bremsbetätigungssignal oder Bremslichtsignal handeln kann, welches von einem Zugfahrzeug übertragen werden kann.

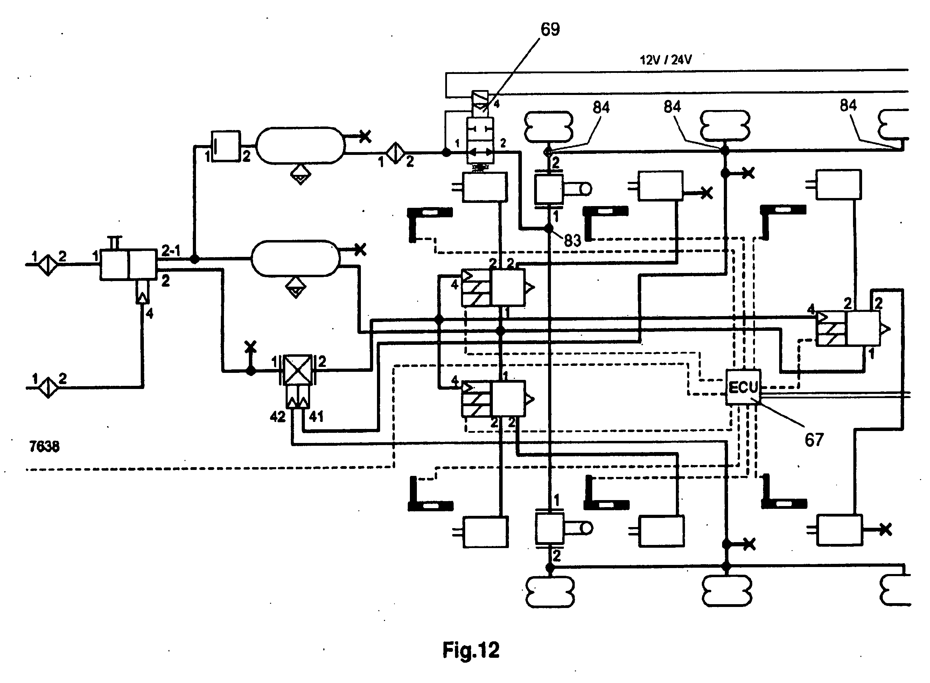

Hingegen zeigt **Fig. 12** eine elektrische Vorsteuerung eines pneumatische Steuereinganges des Sperrventils 69, wobei als elektrisches Steuersignal ebenfalls ein 12 V/24 V-Signal verwendet werden kann, welches beispielsweise der Steuereinheit 67 entstammen kann oder eine Bremslichtsignal sein kann.

Abweichend zu den zuvor dargestellten Ausführungsbeispielen findet erfindungsgemäß in der Druckluftanlage 17, 50 und der Luftfederungsanlage 9 ein sogenanntes Hebe-Senkventil Einsatz finden, wie dieses beispielsweise von der Anmelderin unter der Marke "COLAS" oder WLS" vertrieben wird. Über ein derartiges Hebe-Senkventil kann nach Maßgabe eines Bedienpersonales manuell eine Niveauänderung herbeigeführt werden, also eine Be- oder Entlüftung der Luftfederbälge vorgenommen werden. Dieses ist beispielsweise für Be- und Entladevorgänge oder für eine Anpassung der Niveauhöhe an eine Rampe erforderlich. Üblicherweise besitzt ein derartiges Hebe-Senkventil vier unterschiedliche Stellungen:
- in einer Stellung "FAHRT" ist über das Hebe-Senkventil mindestens ein Niveauregelventil mit mindestens einem Luftfederbalg verbunden, so dass eine Niveauregelung erfolgen kann.
- In einer Stellung "HEBEN" führt dass Hebe-Senkventil einen eingangsseitig anliegenden Vorratsdruck an mindestens einen Luftfederbalg weiter.
- Hingegen verbindet in einer Stellung "SENKEN" das Hebe-Senkventil den mindestens einen Luftfederbalg mit einem Entlüftungsanschluss.
- Schließlich ist eine Stellung "STOP" herbeiführbar, in welcher die Zuleitungen zu den Luftfederbälgen gesperrt sind.

Für eine manuelle Betätigung durch den Benutzer bewegt dieser manuell über einen geeigneten Betätigungsknopf oder durch elektrische oder pneumatische Betätigung das Hebe-Senkventil je nach Wunsch in die Stellungen "HEBEN", "SENKEN" und "STOP". Für die beabsichtigte Bewegung des Fahrzeuges oder Anhängers ist das Hebe-Senkventil in die Stellung "FAHRT" zu überführen. Aus Sicherheitsgründen besitzen heutige Fahrzeuge und Anhänger eine automatische pneumatische, elektrische, federbelastete Rückführung des Hebe-Senkventils in die Stellung "FAHRT", die das Hebe-Senkventil automatisiert mit einsetzendem Fahrbetrieb in die Stellung "FAHRT" überführt. Möglich ist eine Rastierung einzelner Stellungen "HEBEN", "SENKEN" und/oder "STOP". Details hinsichtlich derartiger Hebe-Senkventile, deren konstruktive Ausführung über ein Schaltsymbol hinaus, Betriebsstrategien von Hebe-Senkventilen sowie deren Integration in ein Druckluftsystem und eine Luftfederanlage können beispielsweise den Druckschriften DE 41 20 825, DE 42 02 729 sowie DE 10 2005 019 479 B3, DE 10 2005 017 590 und DE 10 2006 017 890 entnommen werden. Während DE 42 02 729 und DE 41 20 825 ein Hebe-Senkventil zeigen, welches zwei Axialstellungen "FAHRT" und "STOP" besitzt, wobei das Ventil von der Stellung "STOP" zu den Stellungen "HEBEN" und "SENKEN" manuell verschwenkt werden kann, offenbart DE 10 2006 017 890 ein Hebe-Senkventil, bei dem ein Steuerelement von der Position "HEBEN" und "SENKEN", die nicht verriegelt sind, in eine dritte Axialposition verbringbar ist, in der eine verriegelte Stellung "HEBEN" oder "SENKEN" gegeben ist. Sämtliche in den vorgenannten Druckschriften beschriebenen Hebe-Senkventile können im Rahmen der vorliegenden Erfindung wie im folgenden beschrieben Einsatz finden. Grundsätzlich kann es sich bei einem Hebe-Senkventil um ein (ergänzend zur manuellen Aufbringung einer Betätigungskraft) pneumatisch, elektrisch vorgesteuertes oder elektrisch betätigtes Ventil handeln.

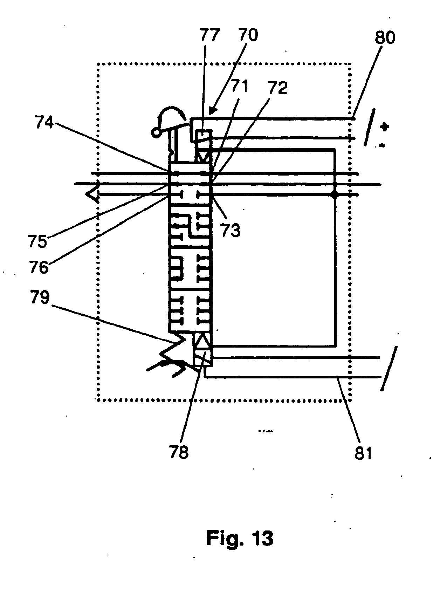

**Fig. 13** zeigt eine beispielhafte Ausgestaltung eines Hebe-Senkventils 70 in schematischer Darstellung. Das Hebe-Senkventil 70 besitzt Eingangsanschlüsse 71-73. Die Eingangsanschlüsse 71 und 72 werden jeweils über ein Niveauregelventil gespeist, während an dem Eingangsanschluss 73 der Vorratsdruck anliegt. Ausgangsanschlüsse 74, 75 des Hebe-Senkventils 70 sind mit Luftfederbälgen verbunden, während ein Ausgangsanschluss 76 eine Entlüftung ermöglicht.

In der in Fig. 13 wirksamen Schaltstellung "FAHRT" verbindet das Hebe-Senkventil 70 den Eingangsanschluss 71 mit dem Ausgangsanschluss 74 sowie den Eingangsanschluss 72 mit dem Ausgangsanschluss 75, so dass die Niveauregelventile das Druckluftniveau der Luftfederbälge regeln können. Die Anschlüsse 73, 75 sind in dieser Stellung "FAHRT" gesperrt.

In der benachbarten Stellung "HEBEN" verbindet das Hebe-Senkventil 70 den Eingangsanschluss 73 mit den Ausgangsanschlüssen 74, 75, so dass die Luftfederbälge über eine Verbindung mit einer Vorratsleitung oder einem Druckluftbehälter befüllt werden können, was ein Anheben des Fahrzeugaufbaus bzw. des Anhängers zur Folge hat. Die weiteren Anschlüsse 71, 72, 76 sind gesperrt.

In der weiteren Stellung "SENKEN" sind sämtliche Eingangsanschlüsse 71-73 gesperrt, während die Ausgangsanschlüsse 74, 75 mit dem Ausgangsanschluss 76 verbunden sind, so dass die Luftfederbälge entlüftet werden können, was mit einer Absenkung des Fahrzeugaufbaus bzw. des Anhängers einhergeht.

In einer weiteren Stellung "STOP" sind sämtliche Anschlüsse 71-76 gesperrt.

Es ist darauf hinzuweisen, dass die in der schematischen Darstellung angegebene Reihenfolge der Stellungen von den tatsächlich vorhandenen Stellungen abweichen kann, s. den zu Hebe-Senkventilen genannten Stand der Technik.

Das Hebe-Senkventil 70 besitzt entgegengesetzt wirkende Steuereinheiten 77, 78, wobei mit Aktivierung der Steuereinheit 77 eine Bewegung des Hebe-Senkventils 70 in Richtung einer Stellung "FAHRT" oder in diese herbeiführbar ist, während über die Beaufschlagung der Steuereinheit 78 eine Bewegung des Hebe-Senkventils 70 in Richtung einer Stellung "STOP" oder unmittelbar in die Stellung "STOP" herbeiführbar ist. Die Kraftniveaus für die unterschiedlichen Stellungen können über ein Federelement 79 beeinflusst werden. Der Steuereinheit 77 wird ein Signal 80 zugeführt, welches eine zukünftige Aufnahme des Fahrbetriebes oder einen Fahrbetrieb oder eine Bewegung des Fahrzeuges oberhalb einer Schwellgeschwindigkeit initiiert. Beispielsweise kann ein derartiges Signal durch eine Steuereinheit ermittelt werden, die eine Fahrersitzerkennung, einen Start der Brennkraftmaschine, das Überschreiten einer Schwellgeschwindigkeit oder ähnliches auswertet.

Der Steuereinheit 78 hingegen wird ein Signal 81 zugeführt, welches mit einer Beschleunigung, insbesondere einer Bremsung korreliert. Hierbei kann es sich unmittelbar um ein elektrisches Bremssignal oder ein Signal eines EBS-Systemes handeln oder ein entsprechendes Signal, welches über eine Steuereinheit berechnet wird.

Für das in Fig. 13 dargestellte Ausführungsbeispiel sind die Steuereinheiten 77, 78 als elektrisch vorgesteuerte pneumatische Steuereinheiten ausgebildet, wofür den Steuereinheiten 77, 78 neben den Signalen 80, 81 ein Vorratsdruck zugeführt wird. Liegt mit dem Signal 80 ein eine Fahrt mit hinreichender Geschwindigkeit indizierendes Signal vor, schaltet das elektrische Vorsteuerventil 77 den Steuerdruck in der Steuereinheit 77 frei, so dass dieser das Hebe-Senkventil in die in Fig. 13 dargestellte Stellung "FAHRT" überführt. Liegt hingegen ein Bremssignal hinreichender Größe vor, bewirkt die Freischaltung des Steuerdruckes in der Steuereinheit 78, dass das Hebe-Senkventil in die Stellung "STOP" überführt wird, für die die Niveauregelung der Luftfederbälge durch die Niveauregelventile unterbrochen ist, bis das Signal 81 wieder so weit abfällt, dass der Steuerdruck der Steuereinheit 78 beseitigt wird und über die Steuereinheit 77 das Hebe-Senkventil 70 wieder in die Stellung "FAHRT" überführt wird.

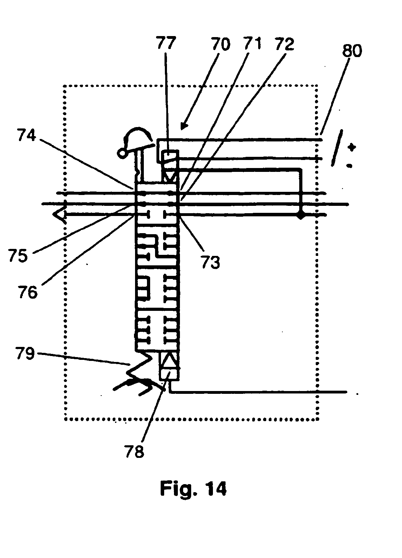

Abweichend hierzu ist die Steuereinheit 78 in dem in **Fig. 14** dargestellten Ausführungsbeispiel pneumatisch ohne elektrische Vorsteuerung ausgebildet. Als Steuerdruck wird der pneumatischen Steuereinheit 78 in diesem Fall ein mit einem Bremsdruck zumindest korrelierender Druck zugeführt, so dass mit hinreichendem Bremsdruck das Hebe-Senkventil 70 automatisiert in die Stellung "STOP" überführt wird, während dieses für ausbleibendem Steuerdruck wieder in die Stellung "FAHRT" zurückkehrt.

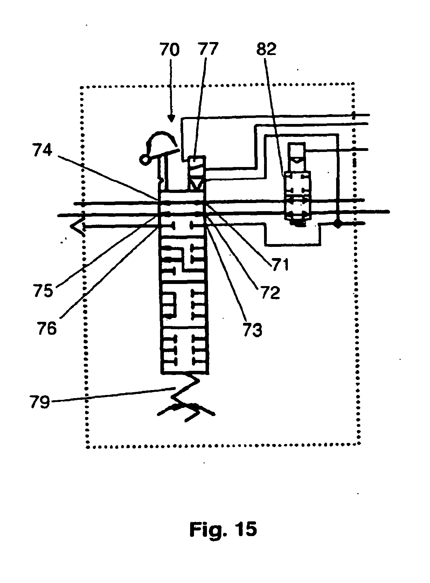

Für das in **Fig. 15** dargestellte Ausführungsbeispiel des Hebe-Senkventils 70 ist die Steuereinheit 78 gänzlich entfallen. In diesem Fall ist den Eingangsanschlüssen 71, 72 ein 4/2-Wegeventil 82 vorgeordnet, welches in der skizzierten, nicht aktivierten Schaltstellung die Niveauregelventile mit den Eingangsanschlüssen 71, 72 verbindet, während in der nicht dargestellten, aktivierten Schaltstellung das 4/2-Wegeventil die Verbindung zwischen den Niveauregelventilen und den Eingangsanschlüssen 71, 72 sperrt. Als Steuerdruck wird dem 4/2-Wegeventil ein Bremsdruck oder ein mit einem Bremsdruck korrelierender Druck zugeführt. Über die Steuereinheit 77 kann somit, wie bereits zuvor erläutert, für den Fall, dass die Bedienperson vergisst, dass Hebe-Senkventil 70 aus der Stellung "STOP" in die Stellung "FAHRT" zurückzuführen, eine automatisierte Rückstellung erfolgen. Hingegen ist das 4/2-Wegeventil 82 für die Aussetzung der Niveauregelung verantwortlich, wenn eine Bremsung erfolgt.

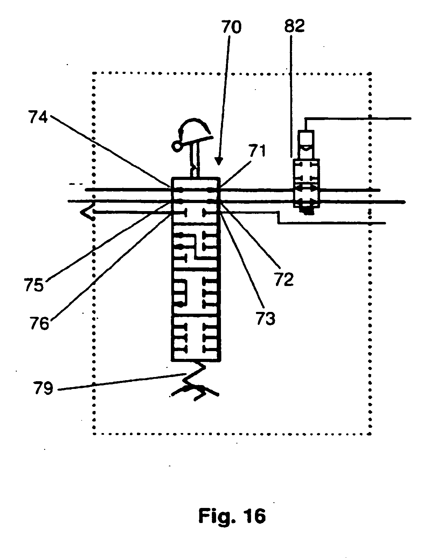

**Fig.16** zeigt eine entsprechende Ausführungsform, bei der allerdings weder die Steuereinheit 77 noch die Steuereinheit 78 vorhanden ist. Auch für diesen Fall erfolgt die Unterbrechung der Niveauregelung durch das mit einem Bremsdruck angesteuerte 4/2-Wegeventil 82.

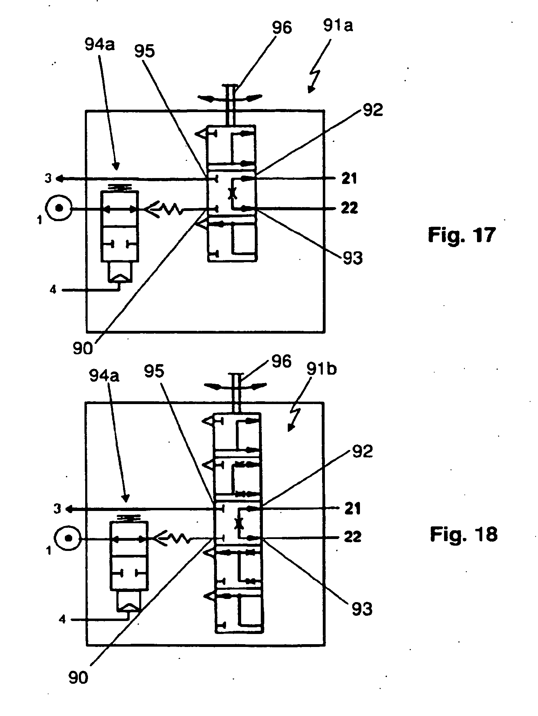

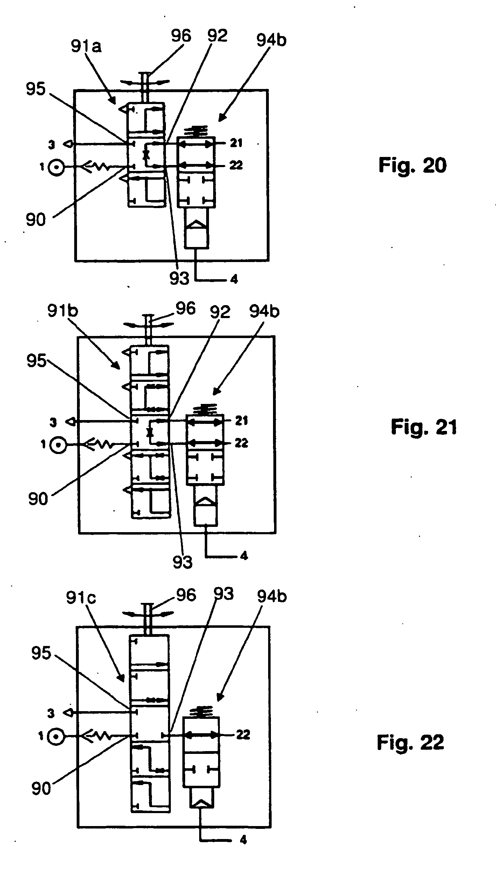

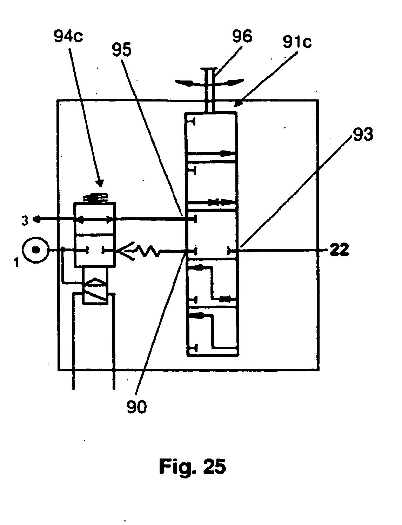

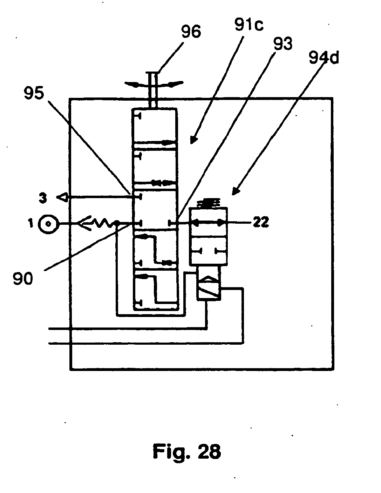

**Fig. 17 - 28** zeigen alternative Ausführungsformen, für die ein beschleunigungsabhängiger oder bremsbeschleunigungsabhängiger Eingriff in einen Eingangsanschluss 90 oder Ausgangsanschlüsse 92, 93 eines Niveauregelventils 91 erfolgt. In den Fig. 17 - 28 sind die Ausgangsanschlüsse 92, 93 des Niveauregelventils 91 mit Luftfederbälgen einer Achse verbunden, wobei gemäß Fig. 20 - 22 und Fig. 26 - 28 zwischen das Niveauregelventil 91 und die Luftfederbälge ein Sperrventil 94 zwischengeschaltet ist. Eingangsseitig wird dem Niveauregelventil 91 über den Eingangsanschluss 90 ein Vorratsdruck oder Behälterdruck zugeführt, wobei die Zuführung gemäß Fig. 17 - 19, 23 - 25 über ein Sperrventil 94 erfolgt. Ein weiterer Eingangsanschluss 95 des Niveauregelventils 91 dient als Entlüftungsanschluss. Für die Fig. 17, 20, 23 und 26 ist das Niveauregelventil 91 als 4/3-Wegeventil 91a ausgebildet, wobei in einer ersten Schaltstellung die Ausgangsanschlüsse 92, 93 mit dem Eingangsanschluss 90 verbunden sind, in einer zweiten, mittleren Schaltstellung die Ausgangsanschlüsse 92, 93 über eine Drossel miteinander verbunden sind und in einer dritten Schaltstellung die Ausgangsanschlüsse 92, 93 mit dem Entlüftungsanschluss 95 verbunden sind.

Für Fig. 18, 21, 24 und 27 ist das Niveauregelventil 91 4/5-Wegeventil 91 b ausgebildet, wobei in einer ersten Schaltstellung die Ausgangsanschlüsse 92, 93 mit dem Eingangsanschluss 90 verbunden sind, in einer zweiten Schaltstellung die Ausgangsanschlüsse 92, 93 jeweils über eine Drossel mit dem Eingangsanschluss 90 verbunden sind, in einer dritten, mittleren Schaltstellung die Ausgangsanschlüsse 92, 93 über eine Drossel miteinander verbunden sind, in einer vierten Schaltstellung die Ausgangsschlüsse 92, 93 jeweils über eine Drossel mit dem Entlüftungsanschluss 95 verbunden sind und in einer fünften Schaltstellung die Ausgangsanschlüsse 92, 93 mit dem Entlüftungsanschluss 95 verbunden sind.

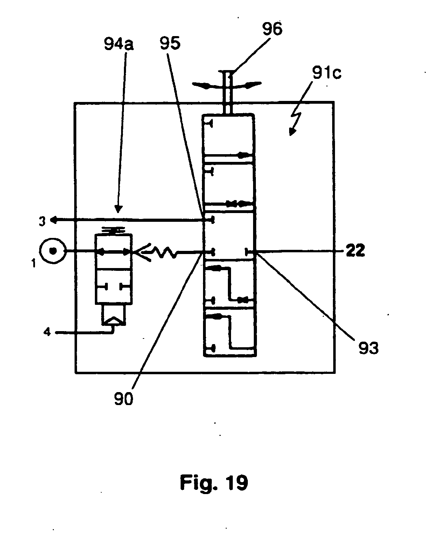

Schließlich ist in den Fig. 19, 22, 25, 28 ein Niveauregelventil 91 in Ausführung als 3/5-Wegeventil 91c eingesetzt, wobei lediglich ein Ausgangsanschluss 93 vorhanden ist. In einer ersten Schaltstellung des Sperrventils 94c ist der Ausgangsanschluss 93 mit dem Eingangsanschluss verbunden und in einer zweiten Schaltstellung ist der Ausgangsanschluss 93 über eine Drossel mit dem Eingangsanschluss 90 verbunden. In einer dritten, mittigen Schaltstellung sind sämtliche Anschlüsse 90, 95, 93 gesperrt, während in einer vierten Schaltstellung der Ausgangsanschluss 93 über eine Drossel mit dem Entlüftungsanschluss 95 verbunden ist und in einer fünften Schaltstellung der Ausgangsanschluss 93 unmittelbar mit dem Entlüftungsanschluss 95 verbunden ist. Die Niveauregelventile 91 a-c sind jeweils mit einem mechanischen Koppelelement 96 ausgestattet, über welches die Schaltstellung des Niveauregelventils 91a-c mechanisch mit dem Fahrzeugniveau gekoppelt ist, so dass sich je nach Niveauhöhe eine geänderte Schaltstellung ergibt, woraus eine automatisierte Regelung des Niveaus resultiert.

Für die in den Fig. 17 - 19 dargestellte Lösung ist zwischen Eingangsanschluss 90 und einer Vorratsleitung oder Behälterleitung ein Sperrventil 94a zwischengeschaltet, welches pneumatisch mit einem Bremsdruck oder mit einem mit einem Bremsdruck korrelierenden Druck derart angesteuert ist, dass ohne anliegenden Bremsdruck das Sperrventil 94a in einer Offnurtgsstellung ist, wie dieses in den Fig. 17 - 19 dargestellt ist, während für eine Bremsbetätigung oder eine Bremsbetätigung mit einem ausreichenden Niveau eine Sperrstellung von dem Sperrventil 94a eingenommen wird, so dass die Druckluftversorgung des Eingangsanschlusses 90 unterbrochen ist. Ein derartiger Einsatz des Sperrventils 94a hat zur Folge, dass für Sperrventil 94a in der Sperrstellung die Druckluftversorgung des Niveauregelventils 91a-c unterbleibt, so dass eine Belüftung der Ausgangsanschlüsse 92, 93 unabhängig von der Stellung des mechanischen Koppelelementes 96 nicht möglich ist, wobei je nach Stellung des mechanischen Koppelelementes 96 eine Entlüftung der Ausgangsanschlüsse 92, 93 durchaus möglich ist. Sofern auch diese unterbleiben soll, ist entsprechend dem Entlüftungsanschluss 95 ein zusätzliches Sperrventil 94 vorzuordnen.

Für das in den Fig. 20 - 22 dargestellte Ausführungsbeispiel ist das Sperrventil 94b als 4/2-Wegeventil ausgebildet, welches pneumatisch über einen Bremsdruck oder über einen mit dem Bremsdruck korrelierenden Druck angesteuert wird. Bei ausbleibendem Bremsdruck oder nicht ausreichendem Bremsdruck befindet sich das Sperrventil 94b in der in den Figuren dargestellten Öffnungsstellung, in welcher die Ausgangsanschlüsse 92, 93 mit den zugeordneten Luftfederbälgen verbunden sind. Mit hinreichendem Bremsdruck wird die Sperrstellung des Sperrventils 94b eingenommen, in welcher die Verbindung zwischen den Ausgangsanschlüssen 92, 93 und den Luftfederbälgen unterbrochen ist. Bei derartiger Ausgestaltung kann über das Sperrventil 94b für eine auftretende Bremsbeschleunigung sowohl eine Belüftung der Luftfederbälge als auch eine Entlüftung der Luftfederbälge trotz entsprechender Schaltstellungen des Niveauregelventils 91a-c unterbunden werden.

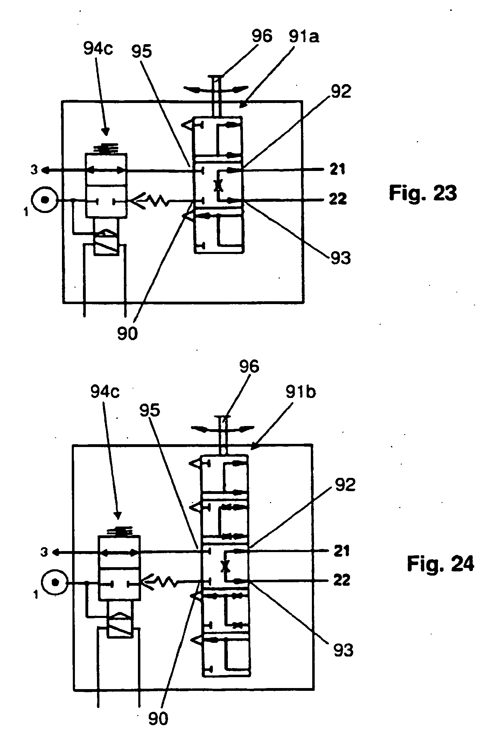

Im Gegensatz zu dem in den Fig. 17 - 19 dargestellten pneumatisch angesteuerten Sperrventil 94a findet in den Fig. 23 - 25 bei Fig. 17 - 19 entsprechender Einbindung des Sperrventils ein elektrisch vorgesteuertes Sperrventil 94c Einsatz, wobei beispielsweise über ein 12/24 V Bremssignal nach ISO 12098 der Vorratsleitungsdruck oder Behälterdruck oder ein hiermit korrelierender Druck vorgesteuert wird. Alternativ kann ein beliebiges elektrisches Signal, welches mit einer Beschleunigung oder einer Bremsbeschleunigung korreliert, beispielsweise ein Signal einer elektrischen Steuereinheit, zur Vorsteuerung herangezogen werden.

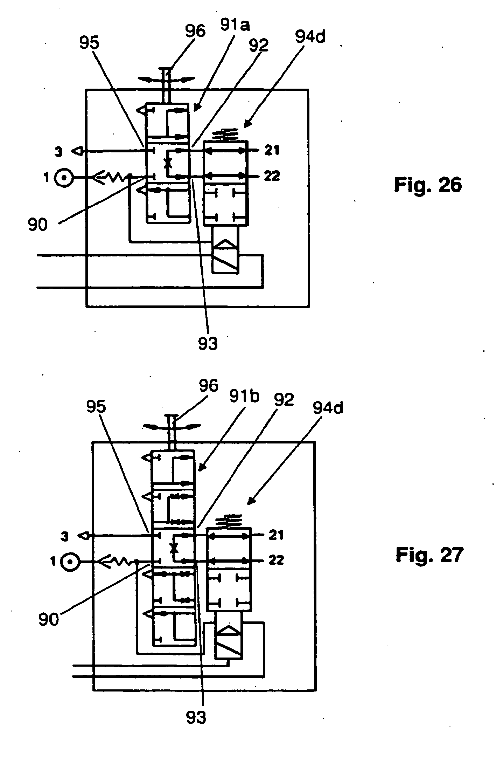

Entsprechend ist in den Fig. 26 - 28 im Gegensatz zu den Fig. 20 - 22 ein den Niveauregelventilen 91 a-c nachgeschaltetes 4/2-Wegeventil 94d dargestellt, welches über ein 12/24 V Bremssignal ISO 12098 oder ein entsprechendes elektrisches Signal vorgesteuert wird. Mit einem elektrischen Vorsteuerelement wird hierzu der an dem Eingangsanschluss 90 anliegende Vorratsdruck oder Behälterdruck zur Vorsteuerung verwendet.

Die in den Figuren dargestellten Sperrventile zur Berücksichtigung der Beschleunigung stellen lediglich beispielhafte Ausgestaltungen dar. Für den Fachmann wird ersichtlich, dass, ohne dass das grundlegende erfindungsgemäße Konzept verlassen wird, alternative Ausgestaltungen möglich sind, die insbesondere in
- der Nutzung eines geänderten elektrischen oder pneumatischen Steuersignales bestehen,
- dem Einsatz von Sperrventilen abweichender Ausgestaltung mit mehr Schaltstellungen, mehreren Ventilkomponenten und/oder gedrosselten Zwischenstellungen oder geregelten Drosseln und/oder
- veränderten Integrationen des Spenventils in die gesamte Druckluftanlage oder Luftfederungsanlage
bestehen können.

Die Ventile 70 und 91 in den Figuren 13-28 können bei entsprechender Ansteuerung und Integration in benachbarte dargestellte Bauelemente wahlweise als Niveauregelventil oder als Hebel-Senkventil ausgebildet sein.

### BEZUGSZEICHENUSTE

- 1: Fahrzeug
- 2: Anhänger
- 3: Rad
- 4: Luftfeder
- 5: Fahrzeugaufbau
- 6: Niveauänderung
- 7: vertikale Beschleunigung
- 8: horizontale Beschleunigung
- 9: Luftfederungsanlage
- 10: Druckluftversorgungseinrichtung
- 11: Ventilbaugruppe
- 12: Entlüftung
- 13: Steuereinrichtung
- 14: Signal
- 15: Signal
- 16: Signal
- 17: Druckluftanlage
- 18: Kompressor
- 19: Druckregler
- 20: Lufttrockner
- 21: Mehrkreisschutzventil
- 22: Druckbegrenzungsventil
- 23: Druckluftbehälter
- 24: Rückschlagventil
- 25: Handbremsventil
- 26: Anhängersteuerventil
- 27: Vorratsleitungsanschluss
- 28: Bremsleitungsanschluss
- 29: Fußbremsventil
- 30: EBS-/ABS-Einheiten
- 31: ALB-Ventil
- 32: Betriebsbremszylinder
- 33: Kombi-Bremszylinder
- 34: Überströmventil
- 35: Druckluftbehälter
- 36: Filter
- 37: Niveauregelventil
- 38: Niveauregelventil
- 39: Luftfederbalg
- 40: Luftfederbalg
- 41: Steuereinrichtung
- 42: Warnlampe
- 43: Sperrventil
- 44: elektrische Steuerleitung
- 45: Radsensor
- 46: Verzweigungsstelle
- 47:
- 48:
- 49:
- 50: Druckluftanlage
- 51: Vorratsleitungsanschluss
- 52: Filter
- 53: Anhängerbremsventil
- 54: Bremsleitungsanschluss
- 55: Filter
- 56: Druckluftbehälter
- 57: ABS-/EBS-Einheit
- 58: Betriebsbremse
- 59: Überströmventil
- 60: Druckluftbehälter
- 61: Filter
- 62: Niveauregelventil
- 63: Niveauregelventil
- 64: Luftfederbalg
- 65: Luftfederbalg
- 66: ALB-Ventil
- 67: Steuereinheit
- 68: Raddrehzahlsensor
- 69: Sperrventil
- 70: Hebe-Senkventil
- 71: Eingangsanschluss
- 72: Eingangsanschluss
- 73: Eingangsanschluss
- 74: Ausgangsanschluss
- 75: Ausgangsanschluss
- 76: Ausgangsanschluss
- 77: Steuereinheit
- 78: Steuereinheit
- 79: Federelement
- 80: Signal
- 81: Signal
- 82: 4/2-Wegeventil
- 83: Verzweigungsstelle
- 84: Verzweigungsstelle
- 85:
- 86:
- 87:
- 88:
- 89:
- 90: Eingangsanschluss
- 91: Niveauregelventil
- 92: Ausgangsanschluss
- 93: Ausgangsanschluss
- 94: Sperrventil
- 95: Entlüftungsanschluss
- 96: mech. Koppelelement

## Patentansprüche

1. Luftfederungsanlage (9) eines Fahrzeuges (1) oder eines Anhängers (2) mit
a) einer Niveauregeleinrichtung (37, 38; 62, 63; 91) und
b) einem zwischen eine Druckluftversorgungseinrichtung (10) und mindestens einen Federbalg (4; 39, 40) zwischengeschalteten Ventil, über welches die Be- und/oder Entlüftung des mindestens einen Federbalgs (4; 39, 40) über die Niveauregeleinrichtung steuerbar ist, wobei
c) die Steuerung der Be- und/oder Entlüftung durch das Ventil ( 70) unter Berücksichtigung eines Beschleunigungszustands erfolgt,
**dadurch gekennzeichnet, dass**
d) das Ventil zur Steuerung der Be- und/oder Entlüftung unter Berücksichtigung des Beschleunigungszustandes ein multifunktionales Hebe-Senkventil (70) ist, welches
da) einerseits zur manuellen Betätigung zum Heben und/oder Senken eines Fahrzeugaufbaus ausgebildet ist und
db) andererseits zur Steuerung der Be- und/oder Entlüftung des mindestens einen Federbalgs (4; 39, 40) unter Berücksichtigung eines Beschleunigungszustands ausgebildet ist, wobei das Hebe-Senkventil (70) eine Stellung "FAHRT" besitzt, in der eine Niveauregelung erfolgen kann, und eine Stellung "STOP", eine Sperrstellung oder eine verminderte Durchlassstellung besitzt, in der die Zuleitungen zu den Federbälgen (4; 39, 40) gesperrt sind oder der Durchlass vermindert ist.

2. Luftfederungsanlage nach Anspruch 1, **dadurch gekennzeichnet, dass** das Hebe-Senkventil (70), über welches die Steuerung der Be- und/oder Entlüftung des mindestens einen Federbalgs (4; 39, 40) erfolgt, stromaufwärts einer Verzweigungsstelle zu Federbälgen unterschiedlicher Achsen und/oder Seiten des Fahrzeuges oder des Anhängers angeordnet ist, so dass über ein einziges Hebe-Senkventil (70) eine Steuerung der Be- und/oder -Entlüftung von Federbälgen unterschiedlicher Achsen des Fahrzeuges oder Anhängers möglich ist.

3. Luftfederungsanlage nach Anspruch 1 oder 2, **dadurch gekennzeichnet, dass** das Hebe-Senkventil (70) von einer Stellung "STOP" in eine Stellung "FAHRT' überführt wird und zur Steuerung der Be- oder Entlüftung unter Berücksichtigung des Beschleunigungszustandes eine automatisierte temporäre Rückstellung in die Stellung "STOP" erfolgt.

4. Luftfederungsanlage nach einem der vorergehenden Ansprüche, **dadurch gekennzeichnet, dass** das Hebe-Senkventil (70) in eine verminderte Durchlassstellung oder Sperrstellung gebracht wird, wenn ein erfasster Beschleunigungswert einen Schwellwert überschreitet.

5. Luftfederungsanlage nach einem der vorhergehenden Ansprüche, **dadurch gekennzeichnet, dass** eine Herbeiführung der Sperrstellung des Hebe-Senkventils (70) in Abhängigkeit des erfassten Beschleunigungszustands nur dann erfogt, wenn eine zusätzlich erfasste Geschwindigkeit oberhalb oder unterhalb eines Schwellwerts liegt.

6. Luftfederungsanlage nach einem der vorhergehenden Ansprüche, **dadurch gekennzeichnet, dass** eine Positionserfassung des Fahrzeuges oder des Anhängers erfolgt und eine Herbeiführung einer Sperrstellung des Hebe-Senkventils (70) in Abhängigkeit eines erfassten Beschleunigungszustands nur dann erfolgt, wenn sich das Fahrzeug oder der Anhänger in ausgewählten territorialen Gebieten bewegt.

7. Luftfederungsanlage nach einem der vorhergehenden Ansprüche, **dadurch gekennzeichnet, dass** eine Herbeiführung einer Sperrstellung des Hebe-Senkventils (70) in Abhängigkeit des erfassten Beschleunigungszustands nur dann erfolgt, wenn eine ermittelte Bremshäufigkeit oberhalb eines Schwellwerts liegt.

8. Luftfederungsanlage nach einem der vorhergehenden Ansprüche, **dadurch gekennzeichnet, dass** eine Herbeiführung einer Sperrstellung des Hebe-Senkventils (70) in Abhängigkeit eines Bremsbetätigungssignals oder Bremslichtsignals erfolgt.

9. Luftfederungsanlage nach einem der vorhergehenden Ansprüche, **dadurch gekennzeichnet, dass** eine Ermittlung eines zukünftig zu erwartenden Beschleunigungszustands erfolgt und vor oder mit dem Auftreten des zu erwartenden Beschleunigungszustands eine Herbeiführung einer Sperrstellung des Hebe-Senkventils (70) erfolgt.

10. Luftfederungsanlage nach einem der vorhergehenden Ansprüche, **dadurch gekennzeichnet, dass** über das Hebe-Senkventil (70) eine Belüftung und/oder Entlüftung des mindestens einen Federbalgs (4; 39, 40) mit dem Erkennen einer Bremssituation gesperrt wird.

11. Luftfederungsanlage nach einem der vorhergehenden Ansprüche, **dadurch gekennzeichnet, dass** eine elektronische Steuereinrichtung (13; 41; 67; 77, 78) vorgesehen ist und das Hebe-Senkventil (70) ein elektrisch betätigbares Steuerventil (Sperrventil 69) ist oder eine elektrisch betätigtes Vorsteuerventil (Sperrventil 43; 69; 94c; 94d) aufweist, welches von der elektronischen Steuereinrichtung (13; 41; 67; 77, 78) angesteuert ist.

12. Luftfederungsanlage nach Anspruch 11, **dadurch gekennzeichnet, dass** die Steuereinrichtung eine Ansteuerung des Hebe-Senkventils (70) unter Berücksichtigung eines Signals oder Betriebszustands eines ABS- oder EBS-Systems (30; 57) vornimmt oder als ABS-oder EBS-Steuereinheit ausgebildet ist.

13. Luftfederungsanlage nach einem der vorhergehenden Ansprüche, **dadurch gekennzeichnet, dass** das Hebe-Senkventil (70) pneumatisch gesteuert wird und als Steuerdruck des Ventils (43; 69; 82; 94a; 94b) ein Drucksignal verwendet wird, welches zumindest mit einem Bremsdruck korreliert.

14. Luftfederungsanlage nach einem der vorhergehenden Ansprüche, **dadurch gekennzeichnet, dass** bei der Steuerung der Be- und/oder Entlüftung durch das Hebe-Senkventil (70) der Beschleunigungszustand aus einem Zeitsignal der Einfederung des Luftfederbalgs ermittelt wird.

15. Luftfederungsanlage nach einem der vorhergehenden Ansprüche, **dadurch gekennzeichnet, dass** für bewegtes Fahrzeug (1) oder Anhänger (2) durch das Hebe-Senkventil (70) die Niveauregeleinrichtung (Niveauregelventil 37, 38; 62, 63; 91) für definierte Zeitintervalle deaktiviert wird und nach Verstreichen des Zeitintervalles nur kurz tätig wird.

16. Luftfederungsanlage nach Anspruch 15, **dadurch gekennzeichnet, dass** das Hebe-Senkventil (70) mit einer Hebe-Senkfunktion ausgebildet ist mit einer Stellung "STOP" und einer Stellung "FAHRT", wobei das Hebe-Senkventil (70) in der Stellung "STOP" die Niveauregeleinrichtung (Niveauregelventil 37, 38; 62, 63; 91) deaktiviert, ausgehend von der Stellung "STOP" manuell Stellungen "HEBEN" und "SENKEN" anwählbar sind und das Hebe-Senkventil (70) von einer Stellung "STOP" in eine Stellung "FAHRT" automatisiert hin- und herbewegbar ist und während des Zeitintervalls das Hebe-Senkventil (70) automatisiert in die Stellung "STOP" verbracht wird und nach Ablauf des Zeitintervalles automatisiert in die Stellung "FAHRT" überführt wird.

## Claims

1. Air suspension system (9) for a vehicle (1) or a trailer (2) with
a) a level control device (37, 38; 62, 63; 91) and
b) a valve positioned between a pressurized air supply device (10) and at least one bellow (4; 39, 40), said valve being used for controlling the aerating and/or de-aerating of at least one bellow (4; 39, 40) via the level control device, wherein
c) the control of the aerating and/or de-aerating by use of the valve (70) is done under consideration of an accelerating state,
**characterised by**
d) the valve for controlling the aerating and/or de-aerating under consideration of an accelerating state being a multifunctional lifting-lowering-valve (70) which
da) is designed for lifting and/or lowering a vehicle body upon manual actuation and
db) is designed for controlling the aerating and/or de-aerating of the at least one bellow (4; 39, 40) under consideration of an accelerating state, wherein the lifting-lowering-valve (70) comprises a position "DRIVE" making a level control possible and comprises a position "STOP", a blocked position or a position with reduced passage, wherein in said position the conduits to the bellows (4; 39, 40) are blocked, interrupted or have a reduced opening cross-section.

2. Air suspension system according to claim 1, **characterised by** the lifting-lowering-valve (70) used for controlling the aerating and/or de-aerating of at least one bellow (4; 39, 40) being located upstream of a branching to bellows associated with different axles and/or sides of the vehicle or trailer such that the aerating and/or de-aerating of bellows associated with different axles of the vehicle or trailer is done with the use of one single lifting-lowering-valve (70).

3. Air suspension system according to claim 1 or 2, **characterised by** the lifting-lowering-valve (70) being transferable from the position "STOP" into a position "DRIVE" and by the lifting-lowering-valve (70) being automatically and temporarily returned into the position "STOP" for controlling the aerating or de-aerating under consideration of an accelerating state.

4. Air suspension system according to one of claims 1 to 3, **characterised by** said lifting-lowering-valve (70) being transferred into a reduced opening state or blocking state in case of a sensed acceleration value exceeding a threshold value.

5. Air suspension system according to one of claims 1 to 4, **characterised by** the lifting-lowering-valve (70) only being transferred into the blocked state in dependence on the sensed accelerating state in case of an additionally sensed velocity being above or below a threshold value.

6. Air suspension system according to one of claims 1 to 5, **characterised by** a position of the vehicle or trailer being sensed and the lifting-lowering-valve (70) only being transferred into the blocked state in dependence on a sensed accelerating state in case of the vehicle or the trailer moving in predetermined territories.

7. Air suspension system according to one of claims 1 to 6, **characterised by** the lifting-lowering-valve (70) only being transferred into the blocked state in dependence on a sensed accelerating state in case of a determined occurrence or frequency of braking operations being larger than a threshold value.

8. Air suspension system according to one of claims 1 to 7, **characterised by** the lifting-lowering-valve (70) only being transferred into a blocked state in dependence on a brake actuation signal or a brake light signal.

9. Air suspension system according to one of claims 1 to 8, **characterised by** a future expected or estimated accelerating state being determined and the lifting-lowering-valve (70) only being transferred into the blocked state before or with the occurrence of the expected accelerating state.

10. Air suspension system according to one of claims 1 to 9, **characterised by** the lifting-lowering-valve (70) with the detection of a brake situation blocking the aerating and/or de-aerating of at least one bellow (4; 39, 40).

11. Air suspension system according to one of claims 1 to 10, **characterised by** an electronic control unit (13; 41; 67; 77, 78) being provided and the lifting-lowering-valve (70) comprising an electrically activated control valve (solenoid valve 69) or an electrically actuated pilot valve (solenoid valve 43; 69; 94c; 94d) which is controlled by the electronic control unit ((13; 41; 67; 77, 78).

12. Air suspension system according to claim 11, **characterised by** the control unit being designed for controlling the lifting-lowering-valve (70) under consideration of a signal or operating state of an ABS- or EBS-system (30; 57) or the control unit being an ABS- or EBS-control unit.

13. Air suspension system according to one of claims 1 to 12, **characterised by** the lifting-lowering-valve (70) being pneumatically controlled and for pneumatically controlling the valve (43; 69; 82; 94a, 94b) a pressure signal being used which at least correlates with a brake pressure.

14. Air suspension system according to one of claims 1 to 13, **characterised by** the control of the aerating and de-aerating by means of the lifting-lowering-valve (70) determining the accelerating state from a time signal of the level of the bellow.

15. Air suspension system according to one of claims 1 to 14, **characterised by** for moved vehicle (1) or trailer (2) by means of the lifting-lowering-valve (70) the level control device (levelling valve 37, 38; 62, 63; 91) being deactivated for defined time intervals and being only activated for a short time after the time interval has elapsed.

16. Air suspension system according to claim 15, **characterised by** the lifting-lowering-valve (70) comprising a lifting-lowering-function with a position "STOP" and a position "DRIVE", wherein the lifting-lowering-valve (70) in the position "STOP" deactivates the level control device (levelling valve 37, 38; 62, 63; 91), starting from a position "STOP" manually positions "LIFTING" and "LOWERING" can be chosen and the lifting-lowering-valve (70) is automatically transferred from a position "STOP" into a position "DRIVE" and back and during the time interval the lifting-lowering-valve (70) is automatically transferred into the position "STOP" and when the time interval has elapsed the lifting-lowering-valve (70) is automatically transferred into the position "DRIVE".

## Revendications

1. Système de suspension pneumatique (9) d'un véhicule (1) ou d'une remorque (2), comportant
a) un dispositif de nivellement (37, 38 ; 62, 63 ; 91), et
b) une vanne, qui est intercalée entre un dispositif d'alimentation en air comprimé (10) et au moins un coussin de suspension (4 ; 39, 40) et par laquelle peut être commandée l'admission d'air et/ou l'évacuation d'air dudit au moins un coussin de suspension (4 ; 39, 40) par l'intermédiaire du dispositif de nivellement, sachant que
c) l'admission d'air et/ou l'évacuation d'air par la vanne (70) est commandée moyennant la prise en compte d'un état d'accélération, **caractérisé en ce que**
d) la vanne pour la commande de l'admission d'air et/ou de l'évacuation d'air avec prise en compte de l'état d'accélération est une vanne de monte et baisse (70) multifonctionnelle, qui
da) d'une part, est réalisée pour la manoeuvre manuelle de montée et/ou de descente d'une carrosserie automobile et
db) d'autre part, est réalisée pour la commande de l'admission d'air et/ou de l'évacuation d'air dudit au moins un coussin de suspension (4 ; 39, 40) moyennant la prise en compte d'un état d'accélération, la vanne de monte et baisse (70) ayant une position « MARCHE », dans laquelle un nivellement peut être effectué, et une position « STOP », une position de fermeture ou une position de passage diminué, dans laquelle les conduites d'acheminement vers les coussins de suspension (4 ; 39, 40) sont fermées ou le passage est réduit.

2. Système de suspension pneumatique selon la revendication 1, **caractérisé en ce que** la vanne de monte et baisse (70), par laquelle s'effectue la commande de l'admission d'air et/ou de l'évacuation d'air dudit au moins un coussin de suspension (4 ; 39, 40), est montée en amont d'un point de ramification vers les coussins de suspension de différents essieux et/ou côtés du véhicule ou de la remorque, de telle sorte qu'une seule vanne de monte et baisse (70) permet de commander l'admission d'air et/ou l'évacuation d'air des coussins de suspension de différents essieux du véhicule ou de la remorque.

3. Système de suspension pneumatique selon la revendication 1 ou 2, **caractérisé en ce que** la vanne de monte et baisse (70) peut être amenée d'une position « STOP » dans une position « MARCHE », et un rappel temporaire automatisé dans la position « STOP » se produit pour la commande de l'admission d'air et/ou de l'évacuation d'air moyennant la prise en compte de l'état d'accélération.

4. Système de suspension pneumatique selon l'une quelconque des revendications précédentes, **caractérisé en ce que** la vanne de monte et baisse (70) est amenée dans une position de passage réduit ou position de fermeture lorsqu'une valeur d'accélération détectée est supérieure à une valeur seuil.

5. Système de suspension pneumatique selon l'une quelconque des revendications précédentes, **caractérisé en ce que** le déplacement de la vanne de monte et baisse (70) dans la position de fermeture en fonction de l'état d'accélération détecté est effectué uniquement lorsqu'une vitesse, détectée en plus, se situe au-dessus ou au-dessous d'une valeur seuil.

6. Système de suspension pneumatique selon l'une quelconque des revendications précédentes, **caractérisé en ce qu'**une détection de la position du véhicule ou de la remorque est effectuée, et le déplacement de la vanne de monte et baisse (70) dans la position de fermeture en fonction de l'état d'accélération détecté est effectué uniquement lorsque le véhicule ou la remorque roulent dans des zones territoriales sélectionnées.

7. Système de suspension pneumatique selon l'une quelconque des revendications précédentes, **caractérisé en ce que** le déplacement de la vanne de monte et baisse (70) dans la position de fermeture en fonction de l'état d'accélération détecté est effectué uniquement lorsqu'une fréquence de freinage déterminée se situe au-dessus d'une valeur seuil.

8. Système de suspension pneumatique selon l'une quelconque des revendications précédentes, **caractérisé en ce que** le déplacement de la vanne de monte et baisse (70) dans la position de fermeture est effectué en fonction d'un signal d'actionnement du frein ou d'un signal de feu de stop.

9. Système de suspension pneumatique selon l'une quelconque des revendications précédentes, **caractérisé en ce qu'**une détermination d'un état d'accélération à escompter ultérieurement est effectuée, et le déplacement de la vanne de monte et baisse (70) dans la position de fermeture est effectué avant ou conjointement avec la survenance de l'état d'accélération à escompter.

10. Système de suspension pneumatique selon l'une quelconque des revendications précédentes, **caractérisé en ce que**, par l'intermédiaire de la vanne de monte et baisse (70), une admission d'air et/ou une évacuation d'air dudit au moins un coussin de suspension (4 ; 39, 40) est fermée avec la détection d'une situation de freinage.

11. Système de suspension pneumatique selon l'une quelconque des revendications précédentes, **caractérisé en ce qu'**il est prévu un dispositif de commande (13 ; 41 ; 67 ; 77, 78) électronique, et la vanne de monte et baisse (70) est une vanne de commande (vanne d'arrêt 69) apte à être actionnée électriquement ou comporte une vanne pilote (vanne d'arrêt 43 ; 69 ; 94c ; 94d) actionnée électriquement, qui est activée par le dispositif de commande (13 ; 41 ; 67 ; 77, 78) électronique.

12. Système de suspension pneumatique selon la revendication 11, **caractérisé en ce que** le dispositif de commande procède à une activation de la vanne de monte et baisse (70) en tenant compte d'un signal ou d'un état de service d'un système ABS ou EBS (30 ; 57) ou est réalisé sous la forme d'une unité de commande ABS ou EBS.

13. Système de suspension pneumatique selon l'une quelconque des revendications précédentes, **caractérisé en ce que** la vanne de monte et baisse (70) est commandée par voie pneumatique et un signal de pression, qui est mis en corrélation avec au moins une pression de freinage, est utilisé comme pression de commande de la vanne (43 ; 69; 82 ; 94a ; 94b).

14. Système de suspension pneumatique selon l'une quelconque des revendications précédentes, **caractérisé en ce que**, lors de la commande de l'admission d'air et/ou de l'évacuation d'air par la vanne de monte et baisse (70), l'état d'accélération est déterminé à partir d'un signal de temps de la compression du coussin de suspension.

15. Système de suspension pneumatique selon l'une quelconque des revendications précédentes, **caractérisé en ce que** pour un véhicule (1) ou une remorque (2) roulant, le dispositif de nivellement (valve de nivellement 37, 38 ; 62, 63 ; 91) est désactivé par la vanne de monte et baisse (70) pendant un intervalle de temps défini et, à la fin de l'intervalle de temps, est actionné uniquement pendant un court laps de temps.

16. Système de suspension pneumatique selon la revendication 15, **caractérisé en ce que** la vanne de monte et baisse (70) est réalisée avec une fonction de montée et descente avec une position « STOP » et une position « MARCHE », sachant que la vanne de monte et baisse (70) dans la position « STOP » désactive le dispositif de nivellement (valve de nivellement 37, 38 ; 62, 63 ; 91), à partir de la position « STOP » peuvent être sélectionnées des positions manuelles « MONTE » et « BAISSE », et la vanne de monte et baisse (70) peut être déplacée automatiquement en va-et-vient d'une position « STOP » dans une position « MARCHE », et pendant l'intervalle de temps la vanne de monte et baisse (70) est amenée automatiquement dans la position « STOP » et à la fin de l'intervalle de temps elle est amenée automatiquement dans la position « MARCHE ».
